(19) Europäisches Patentamt / European Patent Office / Office européen des brevets

(11) **EP 4 056 048 A1**

(12) **EUROPEAN PATENT APPLICATION**
published in accordance with Art. 153(4) EPC

(43) Date of publication:
**14.09.2022 Bulletin 2022/37**

(21) Application number: **20884428.2**

(22) Date of filing: **05.11.2020**

(51) International Patent Classification (IPC):
**A23L 5/00** (2016.01)  **A23L 29/231** (2016.01)
**C08B 37/06** (2006.01)

(52) Cooperative Patent Classification (CPC):
**A23L 5/00; A23L 29/231**

(86) International application number:
**PCT/JP2020/041429**

(87) International publication number:
**WO 2021/090898 (14.05.2021 Gazette 2021/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.11.2019 JP 2019203572**
**22.11.2019 JP 2019211881**

(71) Applicant: **Nippon Beet Sugar Manufacturing Co. Ltd.**
**Tokyo 108-0073 (JP)**

(72) Inventors:
• **ABE, Tatsuya**
**Obihiro-shi, Hokkaido 080-0831 (JP)**
• **NAGURA, Taizo**
**Obihiro-shi, Hokkaido 080-0831 (JP)**

(74) Representative: **Vossius & Partner**
**Patentanwälte Rechtsanwälte mbB**
**Siebertstraße 3**
**81675 München (DE)**

(54) **METHOD FOR PRODUCING WATER-SOLUBLE POLYSACCHARIDES**

(57) [Problem] An object is to obtain a water-soluble polysaccharide (mainly pectin) in a high yield under mild extraction conditions (temperature and pH) and also without using any special agent or extraction device, and to suppress the excessive degradation of the polysaccharide (reduction in the molecular weight of a neutral sugar side chain, demethyl esterification, and deacetylation).

[Means for Solution] By adjusting the particle size of pulp dried with superheated steam of the beet pulp generated as a by-product in a step of producing sugar from sugar beet and using the resultant as a raw material, a water-soluble polysaccharide (mainly pectin) can be obtained in a high yield in a short time under mild extraction conditions, and also the excessive degradation of the water-soluble polysaccharide (reduction in the molecular weight of a neutral sugar side chain, demethyl esterification, and deacetylation) can be suppressed.

[Fig. 1]

EP 4 056 048 A1

**Description**

Technical Field

The present invention relates to a method for producing a water-soluble polysaccharide, particularly a method for extracting pectin. Specifically, it is a method using, as a raw material, a material (superheated steam-dried pulp) dried with superheated steam in advance of beet pulp which is a residue after extracting the sugar content from Beta vulgaris ssp. vulgaris (also known as sugar radish, sugar beet, or simply called beet), and is a method for extracting a water-soluble polysaccharide (containing pectin as a main component) in a high yield by a simple method from the superheated steam-dried pulp, and is characterized in that the water-soluble polysaccharide is rich in molecules with a relative molecular weight of 10,000 to 100,000. In addition, it relates to a method for extracting a water-soluble polysaccharide characterized in that since it is not necessary to add an acid during extraction, the hydrolysis of a methyl ester group or an acetyl group, each of which is a modifying group of an acidic sugar main chain in a pectin molecule, or a neutral sugar side chain is suppressed, and thus a water-soluble polysaccharide having a high degree of methyl esterification and a high degree of acetylation and rich in neutral sugars mainly containing arabinose as a constituent sugar is obtained, and the like.

Background Art

In recent years, in the food field, in order to respond to consumers' health consciousness, diversification of tastes, changes in needs, etc., the development of foods with new texture, health functionality, or the like has been demanded, and also needs for natural raw materials have been increasing. As a material that responds to this, a food hydrocolloid is exemplified. The food hydrocolloid has viscosity, a gelling property, dispersibility, an emulsifying property, etc., and by adding it in a small amount in the process for producing a food, its texture and appearance are improved, and functionality can be imparted. As the food hydrocolloid, materials such as polysaccharides and proteins are known. Among the polysaccharides, pectin is widely used for gelation of jellies, jams, and the like, stabilization of dispersion of milk protein in acidic milk-based drinks, and the like.

Pectin is universally present in the cell walls and middle leaf tissues of all higher plants, but its quantity and quality differ significantly depending on the type or site of each plant body. Conventionally, as a raw material for extracting pectin, citrus fruit peel, apple pomace, beet pulp, or the like, having a high pectin content, has been used.

In general, beet pulp contains about 20% of an acidic sugar (mainly galacturonic acid), about 20% of arabinose, and about 5% of galactose per dry material as constituent sugars of pectin, and contains about 2% of a methyl ester group and about 4% of an acetyl group as modifying groups of the acidic sugar. In addition, it contains about 1% of ferulic acid that is linked to arabinose or galactose. Therefore, about 50% of beet pulp is the constituent components of pectin (NPL 1).

In the basic structure of pectin in a plant, homogalacturonic acid, in which D-galacturonic acid is linked through an $\alpha$-1,4-glycosidic bond, is included as a main chain backbone. In the main chain, rhamnogalacturonan, in which D-galacturonic acid and L-rhamnose are alternately linked, is partially present. To a rhamnose residue in this main chain, a side chain composed of L-arabinose, D-galactose, or D-xylose, each of which is a neutral sugar, is linked. Further, carbon at position 6 and carbon at position 3 (partially carbon at position 2) of galacturonic acid in the main chain are partially methyl-esterified and acetylated, respectively.

It is known that pectin has different gelling properties depending on the methyl ester (methoxyl) content. The ratio of galacturonic acid methyl ester to all galacturonic acids (all carboxyl groups) is called degree of esterification or methyl esterification (DE), and one having a DE higher than 50% is classified into HM pectin, and one having a DE of 50% or less is classified into LM pectin. The gelling property differs depending on the DE such that a sugar and an acid are needed for the gelation of an aqueous solution of HM pectin, and the addition of a divalent cation such as a calcium salt is essential for the gelation of LM pectin, etc.

Pectin in a beet root belongs to HM pectin, but its gelling property is low even if a sugar or an acid is added. This is considered to be because the acetyl group content or the proportion of side chains of beet pectin is higher than that of other pectin of citrus fruits or the like. In addition, the fact that ferulic acid is linked to a neutral sugar side chain is also a structural characteristic of beet pectin.

A plant (a citrus fruit, apple, or beet) used as a raw material for extracting pectin is used for juice production or sugar production while the plant body is fresh after it is harvested from the field, and therefore, its residue (citrus peel, apple pomace, or beet pulp) is generated all at once. In addition, such a residue is likely to rot, and therefore is usually subjected to a drying treatment so that it can be stored for a long period of time and transported when it is utilized.

As a method for extracting pectin from citrus peel, apple pomace, or beet pulp, a method of heating under an acidic condition using water as an extraction solvent is generally used. As the acid extraction conditions, it is common to add a mineral acid such as hydrochloric acid, nitric acid, or sulfuric acid to adjust the pH to 1.0 or higher and lower than 3.0, and to perform a heating treatment at 50 to 90°C for 3 to 12 hours. By this step, pectin is eluted from the plant tissue, and a pectin-containing aqueous solution is obtained by removing the insoluble residue through solid-liquid separation.

As a method of purifying pectin, an alcohol precipitation method is generally used, and pectin is precipitated and recovered, and then purified by removing small-sized molecules contained in advance in the raw material or small-sized molecules or the like generated during extraction.

In general, when heating is performed under an acidic condition, degradation of pectin also occurs, and therefore, the economical yield of pectin eventually reaches a plateau and starts to decrease. With respect to the acidic heating conditions when extracting pectin from dried beet pulp and the yield of beet pectin (% per dry raw material), the maximum yield of 23.2% under the extraction conditions of pH 1.0 to 1.5, 85 to 95°C, and 2 to 5 hours is reported in NPL 2. Further, in NPL 3, the maximum yield of about 17% under the extraction conditions of pH 1.5, 85°C, and 4 hours is reported. When considering that the pectin constituent components are generally contained in an amount of about 50% per dry raw material, this yield is by no means high.

As described above, in the extraction method by heating under an acidic condition, the hydrolysis of a methyl ester group or an acetyl group of galacturonic acid in the main chain of pectin, or a neutral sugar side chain occurs. Therefore, the acid and heating extraction conditions have a great influence on the structure and physical properties of the extracted pectin. In general, the lower the pH is, the better the yield of pectin can be extracted at a relatively low temperature and in a short time, but the residual ratio of the neutral sugar side chains, the degree of methyl esterification and the degree of acetylation decrease. On the contrary, at a pH close to neutral (pH 3 to 5), pectin in which the residual ratio of neutral sugar side chains is high and the degree of methyl esterification and the degree of acetylation are high is obtained, but the yield is low, and in order to increase the yield, it is necessary to perform extraction under a high temperature condition of 100°C or higher, or for a long period of time in the case of 100°C or lower. Therefore, it is necessary to carefully control the production conditions such as extraction temperature, time, and pH so that pectin with a desired quality is obtained in a good yield.

In addition, in order to adjust the pH to a predetermined value by adding an acid after suspending a plant body that is a raw material of pectin in water, a large amount of an acid is needed. For example, in order to adjust a beet pulp suspension to pH 2.0, concentrated sulfuric acid in an amount of about 3 wt% per dry weight of beet pulp is needed, and in order to adjust a beet pulp suspension to pH 1.5, concentrated sulfuric acid in an amount of about 5 wt% is needed. After recovering pectin from the strongly acidic pectin aqueous solution prepared in this manner by an ethanol precipitation method, an MF filtration or ultrafiltration method, or the like, a large amount of an acidic liquid is discharged, and therefore, it is necessary to finally perform a neutralization treatment with an alkali. Accordingly, the acid extraction method has a problem that the amount of acid and alkali agents used imposes a heavy burden in terms of cost and environment.

In this manner, in the acid extraction method for pectin, although the device is simple, the yield of pectin is limited, and it has restrictions in terms of quality in the respect that pectin is partially degraded, and technical problems of cost and environment in the respect that large amounts of an acid and an alkali are needed.

On the other hand, as an extraction method that does not use an acid, PTL 1 discloses a technique for performing hot water extraction at 90°C for 1 hour from undried beet pulp. PTL 2 discloses a method for performing extraction from dried beet pulp on the essential condition that a cationic surfactant such as benzyltrimethylammonium chloride is added to water for the purpose of improving the yield of pectin. However, in the method that does not use an acid, the yield of pectin is not at a satisfactory level, and the use of a cationic surfactant is not suitable for application to food production.

On the other hand, an improved method for extracting pectin combining a physical action has been proposed. For example, a treatment in which raw material apple pomace is subjected to an extrusion pretreatment in advance, and then acid extraction is performed, or an ultrasonic pulse is applied during acid extraction has been proposed as a method capable of reducing the degradation of pectin, increasing the yield of pectin, and reducing the extraction time. Further, it has been reported that as a heating method during extraction, a heating method using a microwave or a flash extraction method using steam injection heating has a favorable effect on the yield and quality of pectin. However, since each method needs a special device, the initial cost of introducing the device increases, and the maintenance cost of the device will be a continuous burden.

In these technical backgrounds, when mentioning about a method for extracting pectin from plant tissues, particularly beet pulp, in order to recover pectin in a high yield, the pH and temperature during extraction are severe, and therefore, the hydrolysis of a methyl ester group, an acetyl group, and a neutral sugar side chain in the pectin molecule was unavoidable. In other words, a high-yield and low-cost method using an extraction device having a simple structure for a technique for obtaining a water-soluble polysaccharide, which contains pectin as a main component, and has a high degree of methyl esterification and a high degree of acetylation, and is rich in neutral sugars mainly containing arabinose as a constituent sugar, has not been known. Then, as its approach, no efforts focusing on the difference in the state and properties of the raw material due to the method of drying beet pulp have been made.

Citation List

Patent Literature

PTL 1: Japanese Patent No. 2542462
PTL 2: JP-B-63-9521
PTL 3: Japanese Patent No. 5900792
PTL 4: Japanese Patent No. 5805390

Non Patent Literature

NPL 1: L. Saulnier and J. F. Thibault, J. Sci. Food and Agric., 79, 396-402 (1999)
NPL 2: F. Michel et al; Extraction and characterization of pectins from sugar BEET PULP, J. Food Sci., 50, 1499-1500 (1985)
NPL 3: R. Sun et al; Extraction and physico-chemical characterization of pectins from sugar BEET PULP, Polymer journal, 30(8), 971-977 (1998)

Summary of Invention

Technical Problem

An object of the present invention is to provide a new pectin extraction method, with which a high yield can be achieved in spite of mild temperature and pH extraction conditions in the extraction of a water-soluble polysaccharide (containing pectin as a main component) from beet pulp, and as a result, the demethyl esterification and deacetylation of pectin are suppressed, and also the excessive degradation of a neutral sugar side chain is suppressed. Since mild extraction conditions that have not been used in the past due to poor extraction efficiency and impracticality can be adopted, the composition of pectin is unprecedented and unique, and it is expected to have special functionality and physical properties. In addition, its goal is to provide an extraction method, with which the purity of the water-soluble polysaccharide per solid content is high without particularly performing purification by suppressing the excessive degradation of a neutral sugar side chain during extraction, and both a high yield and a high purity can be achieved.

Solution to Problem

In order to achieve the above object, the present inventors focused on the importance of a raw material as a result of studies from various aspects, and found, as a result of further intensive studies, that by using pulp obtained by drying pulp (pressed pulp) resulting from pressing (dehydrating) a residue after extracting the sugar content from sugar beet with superheated steam under certain conditions as an extraction raw material after further performing a pulverization treatment, pectin can be extracted in a high yield in a relatively short time without using an acid and also without raising the temperature to a high temperature in a step of extracting pectin, and the pectin obtained by this method is unprecedented, and has a high degree of methyl esterification and a high degree of acetylation, is rich in neutral sugars mainly containing arabinose as a constituent sugar, and has an effect of obtaining a pectin extract liquid rich in molecules with a relative molecular weight of 10,000 to 100,000. In addition, they found that an extract in which the purity of a water-soluble polysaccharide per solid content is high without particularly performing purification is obtained, and both a high yield and a high purity can be achieved, and thus completed the present invention.

That is, an example of an embodiment of the present invention is as follows.

(1) A method for producing a water-soluble polysaccharide, characterized by performing extraction at 60 to 140°C using dried beet pulp obtained by superheated steam drying as a raw material.
(2) The method for producing a water-soluble polysaccharide according to (1), characterized in that when the beet pulp described in (1) used as the raw material is adjusted to a particle size passing through a sieve with a mesh size of 2.0 mm and suspended in water at 20°C for 24 hours, the water-soluble polysaccharide is extracted in an amount of 10 wt% or more per dry raw material.
(3) The method for producing a water-soluble polysaccharide according to any one of (1) to (2), characterized in that beet pulp with a particle size passing through a sieve with a mesh size of 2.0 mm is used as the raw material.

(4) The method for producing a water-soluble polysaccharide according to any one of (1) to (2), characterized in that beet pulp with a particle size passing through a sieve with a mesh size of 0.84 mm is used as the raw material.

(5) The method for producing a water-soluble polysaccharide according to any one of (1) to (4), characterized in that the superheated steam drying is performed under the conditions of 0.12 to 0.40 MPa and 110°C to 200°C.

(6) The method for producing a water-soluble polysaccharide according to any one of (1) to (5), characterized in that the superheated steam drying is performed for a treatment time of 45 minutes or less, preferably 1 to 15 minutes.

(7) The method for producing a water-soluble polysaccharide according to any one of (1) to (6), characterized in that the extraction condition is pH 3.0 to 5.0.

(8) The method for producing a water-soluble polysaccharide according to any one of (1) to (7), characterized in that the extraction condition is 70 to 100°C.

(9) The method for producing a water-soluble polysaccharide according to any one of (7) to (8), characterized in that in the composition of an extract containing the water-soluble polysaccharide to be obtained, a solid content with a relative molecular weight, measured by gel filtration HPLC using pullulan as a standard substance, of 2,000 or more with respect to the total solid content is 65% or more.

(10) The method for producing a water-soluble polysaccharide according to any one of (7) to (8), characterized in that in the water-soluble polysaccharide to be obtained, the ratio of a solid content with a relative molecular weight, measured by gel filtration HPLC using pullulan as a standard substance, of 10,000 to 100,000 to a solid content with a relative molecular weight of 2,000 or more is 40% or more.

(11) The method for producing a water-soluble polysaccharide according to any one of (7) to (8), wherein the water-soluble polysaccharide to be obtained has a degree of methyl esterification of 60% or more and a degree of acetylation of 50% or more.

(12) The method for producing a water-soluble polysaccharide according to any one of (7) to (8), wherein in a material obtained by subjecting the water-soluble polysaccharide to be obtained to a dialysis treatment with a molecular weight cut-off of 10,000 to 20,000 to remove small-sized molecules, the neutral sugar/acidic sugar ratio (w/w) of the constituent sugars is 0.6 to 1.5.

(13) A method for producing a water-soluble polysaccharide, characterized by performing pulverization to a particle size passing through a sieve with a mesh size of 0.84 to 2.0 mm using beet pulp dried with superheated steam at 110 to 200°C and 0.12 to 0.40 MPa as a raw material, and performing extraction under the conditions of 60 to 140°C and pH 3.0 to 5.0.

(14) A method for producing a water-soluble polysaccharide, characterized by performing pulverization to a particle size passing through a sieve with a mesh size of 0.84 to 2.0 mm using beet pulp obtained by drying with superheated steam at 110 to 200°C and 0.12 to 0.40 MPa using a superheated steam dryer as a raw material, and performing extraction under the conditions of 60 to 140°C and pH 3.0 to 5.0.

(15) A method for producing a water-soluble polysaccharide, characterized by including the following Step A to Step C:

Step A: a step of drying beet pulp with superheated steam at 110 to 200°C and 0.12 to 0.40 MPa;
Step B: a step of pulverizing the beet pulp obtained in Step A to a particle size passing through a sieve with a mesh size of 0.84 to 2.0 mm; and
Step C: a step of performing extraction from the beet pulp obtained in Step B under the conditions of 60 to 140°C and pH 3.0 to 5.0.

(16) A method for producing a water-soluble polysaccharide while suppressing the excessive degradation and coloration of the water-soluble polysaccharide by controlling a reaction using a reaction severity represented by the following Formula (1) as an index, characterized by performing extraction with hot water over 100°C using dried beet pulp obtained by superheated steam drying as a raw material:

$$\text{Reaction severity} = \text{reaction time [min]} \times \exp\{(\text{reaction temperature [°C]} - 100) / 14.75\} \cdots \text{Formula (1)}.$$

(17) The method according to (16), characterized by performing the extraction with hot water at 140°C or lower using dried beet pulp obtained by superheated steam drying as a raw material, wherein the extraction is performed within a range where the reaction severity does not exceed 150.

(18) A beet-derived water-soluble polysaccharide, characterized in that a solid content with a relative molecular weight, measured by gel filtration HPLC using pullulan as a standard substance, of 2,000 or more with respect to the total solid content is 65% or more, and at least one of the following requirements (a) to (c) is satisfied:

(a) the ratio of a solid content with a relative molecular weight, measured by gel filtration HPLC using pullulan as a standard substance, of 10,000 to 100,000 to a solid content with a relative molecular weight of 2,000 or more is 40% or more;
(b) the degree of methyl esterification is 60% or more and the degree of acetylation is 50% or more; and
(c) in a material obtained by performing a dialysis treatment with a molecular weight cut-off of 10,000 to 20,000 to remove small-sized molecules, the neutral sugar/acidic sugar ratio (w/w) of the constituent sugars is 0.6 to 1.5.

(19) A beet-derived water-soluble polysaccharide, characterized in that a solid content with a relative molecular weight, measured by gel filtration HPLC using pullulan as a standard substance, of 2,000 or more with respect to the total solid content is 65% or more, and the following requirements (a) to (c) are satisfied:

(a) the ratio of a solid content with a relative molecular weight, measured by gel filtration HPLC using pullulan as a standard substance, of 10,000 to 100,000 to a solid content with a relative molecular weight of 2,000 or more is 40% or more;
(b) the degree of methyl esterification is 60% or more and the degree of acetylation is 50% or more; and
(c) in a material obtained by performing a dialysis treatment with a molecular weight cut-off of 10,000 to 20,000 to remove small-sized molecules, the neutral sugar/acidic sugar ratio (w/w) of the constituent sugars is 0.6 to 1.5.

Advantageous Effects of Invention

Until now, in order to extract pectin in a high yield, it was common to perform extraction under an acidic condition of lower than pH 3.0 and a high temperature condition, but according to the present invention, it is not necessary to particularly add a mineral acid, and a water-soluble polysaccharide mainly containing a large amount of pectin can be obtained in a short time by hot water extraction. In addition, it is possible to obtain a characteristic water-soluble polysaccharide rich in molecules with a relative molecular weight of 10,000 to 100,000.

Then, the pH during extraction is 3.0 to 5.0 and is mild, and therefore, it is possible to obtain a water-soluble polysaccharide, which mainly contains pectin, and has a high degree of methyl esterification and a high degree of acetylation, and is rich in neutral sugars mainly containing arabinose as a constituent sugar. Further, the excessive degradation of pectin during extraction is suppressed, and therefore, an extract in which the purity of a water-soluble polysaccharide per solid content is high is obtained without particularly performing purification, and both a high yield and a high purity can be achieved. Due to mild extraction conditions, as the facility or the like, a simple one may be used, and these greatly contribute to cost reduction. Since it is not necessary to handle a mineral acid, an advantage of increasing the security and safety in the working environment and natural environment is brought about.

Further, as described above, the composition of the water-soluble polysaccharide obtained in the present invention is unique, and a new biological activity (food processing characteristic) is also expected. According to the present invention, this can be obtained, which is also a remarkable effect.

Brief Description of Drawings

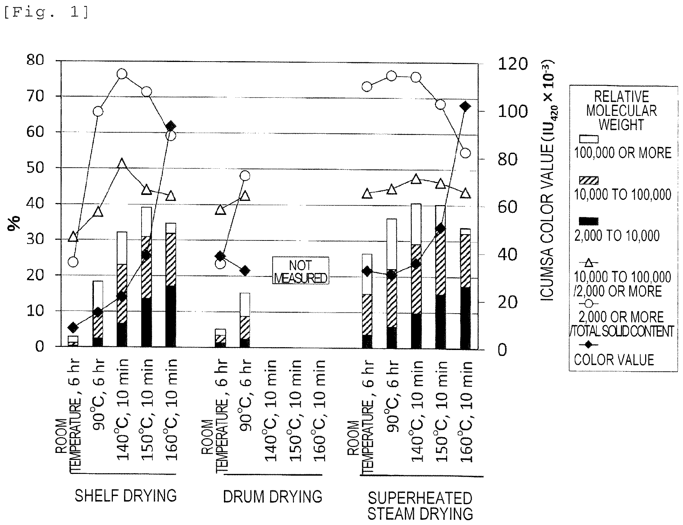

[Fig. 1] Fig. 1 is a graph showing the yield (wt%) of a solid content with a molecular weight of 2,000 or more per dry raw material when extraction was performed at various temperatures for various times without pH adjustment (pH 4 to 5) using beet pulp obtained using different drying methods for each molecular weight category (2,000 to 10,000, 10,000 to 100,000, and 100,000 or more). In addition, it is a graph showing the ratio of a solid content with a molecular weight of 2,000 or more to the total solid content extracted, the ratio of a molecular weight category (10,000 to 100,000) to the solid content with a molecular weight of 2,000 or more, and a color value.

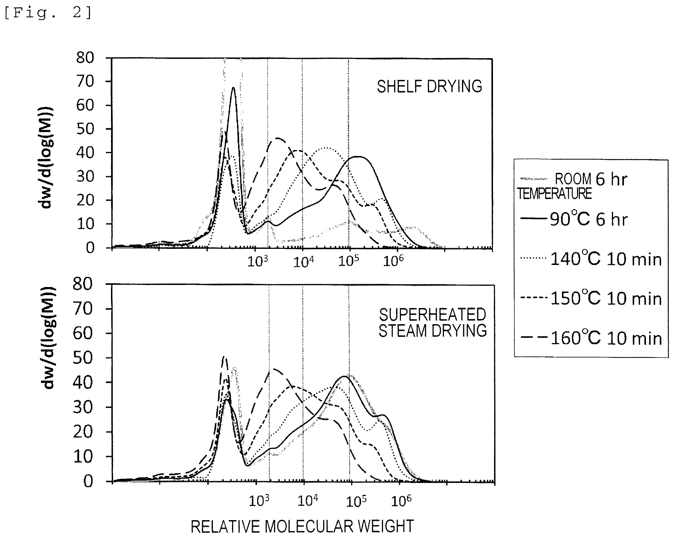

[Fig. 2] Fig. 2 is a graph showing the molecular weight distribution of an extract when extraction was performed at various temperatures for various times without pH adjustment (pH 4 to 5) using shelf-dried pulp (normal pressure: 105°C, hot air circulation drying) and superheated steam-dried pulp as raw materials.

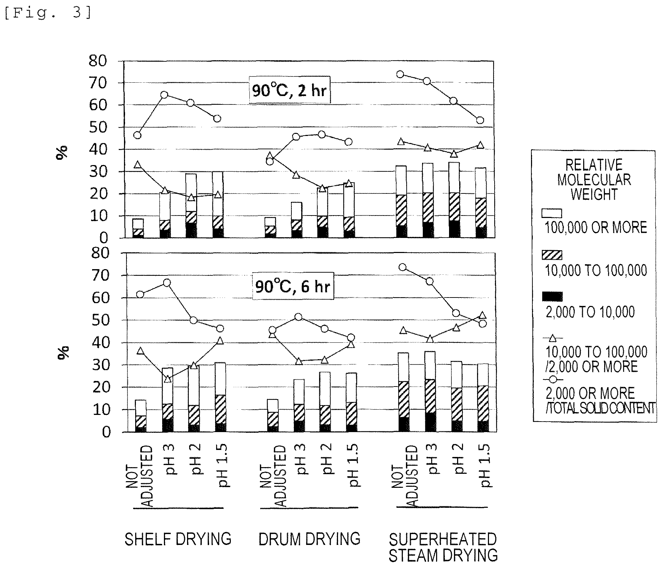

[Fig. 3] Fig. 3 is a graph showing the yield (wt%) of a solid content with a molecular weight of 2,000 or more per dry raw material when extraction was performed at various pH values at 90°C for 2 hours or 6 hours using beet pulp obtained using different drying methods for each molecular weight category (2,000 to 10,000, 10,000 to 100,000, and 100,000 or more). In addition, it is a graph showing the ratio of a solid content with a molecular weight of 2,000 or more to the total solid content extracted, and the ratio of a molecular weight category (10,000 to 100,000) to the solid content with a molecular weight of 2,000 or more.

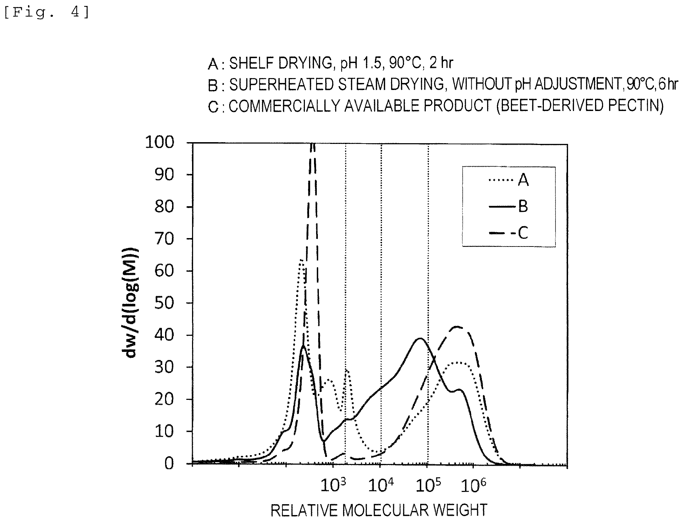

[Fig. 4] Fig. 4 is a graph showing the molecular weight distribution of each of a material obtained by extraction at pH 1.5 and 90°C for 2 hours using shelf-dried pulp as a raw material, a material obtained by extraction at 90°C for 6 hours without pH adjustment (pH 4 to 5) using superheated steam-dried pulp as a raw material, and commercially available beet-derived pectin.

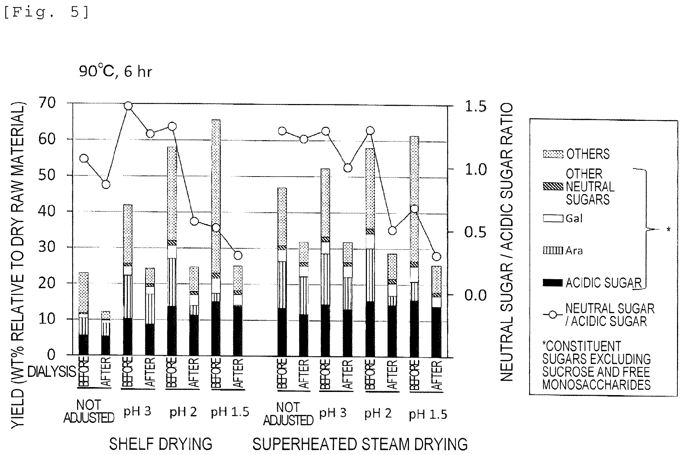

[Fig. 5] Fig. 5 is a graph showing the yield of constituent sugars {an acidic sugar, arabinose, galactose, and others (rhamnose, xylose, mannose, and fucose), but excluding sucrose and free monosaccharides}, and the yield of other components before and after dialysis with a dialysis membrane with a molecular weight cut-off of 14,000 for extracts obtained under the extraction conditions of 90°C and 6 hours by adjusting the pH to various values using shelf-dried pulp and superheated steam-dried pulp as raw materials.

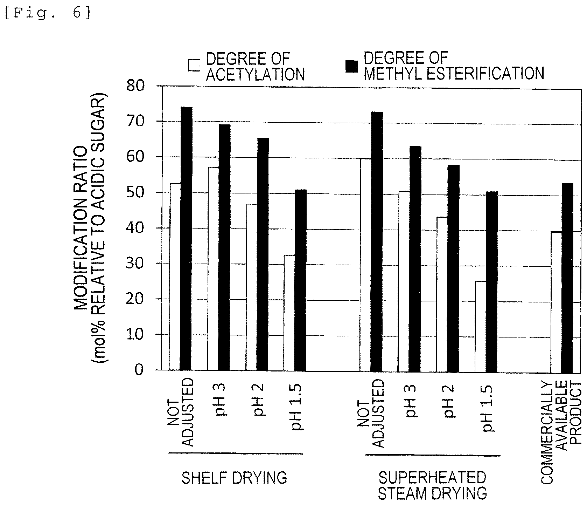

[Fig. 6] Fig. 6 is a graph showing the molar ratio of linked acetic acid to an acidic sugar (the degree of acetylation) and the molar ratio of linked methanol to an acidic sugar (the degree of methyl esterification) for materials obtained by dialysis with a molecular weight cut-off of 14,000 of extracts obtained under the extraction conditions of 90°C and 6 hours by adjusting the pH to various values using shelf-dried pulp and superheated steam-dried pulp as raw materials, and commercially available beet-derived pectin.

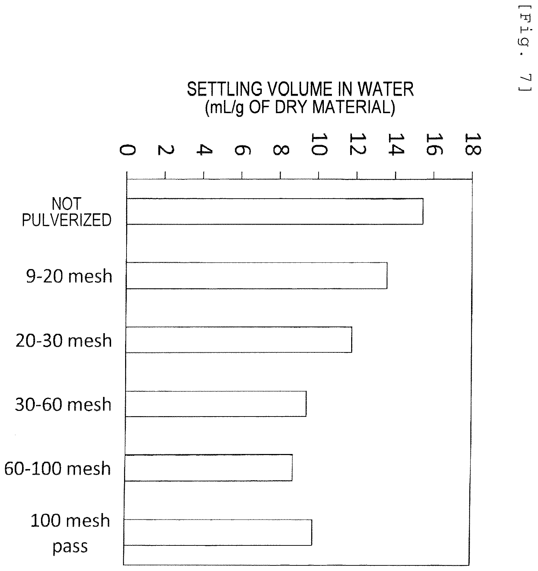

[Fig. 7] Fig. 7 is a graph of comparison of the volume of pulp swollen in water (settling volume in water) due to the difference in the raw material particle size of pulverized superheated steam-dried pulp.

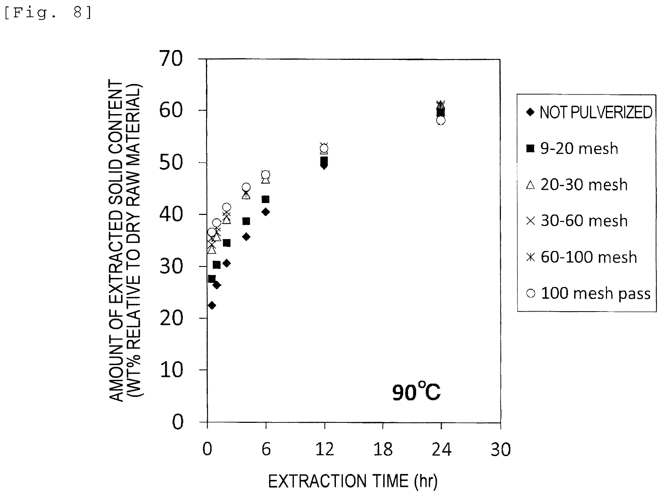

[Fig. 8] Fig. 8 is a graph of comparison of the time-course change in the yield of a solid content when extraction was performed at 90°C using superheated steam-dried pulp pulverized to various particle sizes as a raw material.

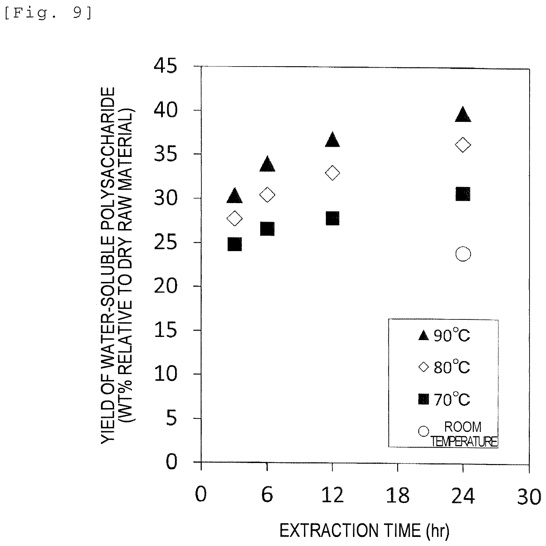

[Fig. 9] Fig. 9 is a graph showing the time-course change in the yield of a water-soluble polysaccharide when extraction was performed at various temperatures for various times using superheated steam-dried pulp as a raw material. The water-soluble polysaccharide is the sum of constituent sugars excluding sucrose and free monosaccharides, linked acetic acid, linked methanol, and ferulic acid.

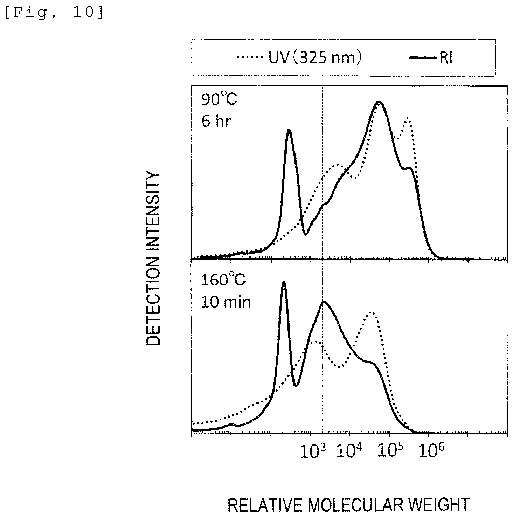

[Fig. 10] Fig. 10 is a graph showing the molecular weight distribution of each extract obtained under the extraction conditions of 90°C and 6 hours or 160°C and 10 minutes using superheated steam-dried pulp as a raw material and obtained by measuring the detection intensity using two types of detectors (RI detector and UV detector (325 nm)).

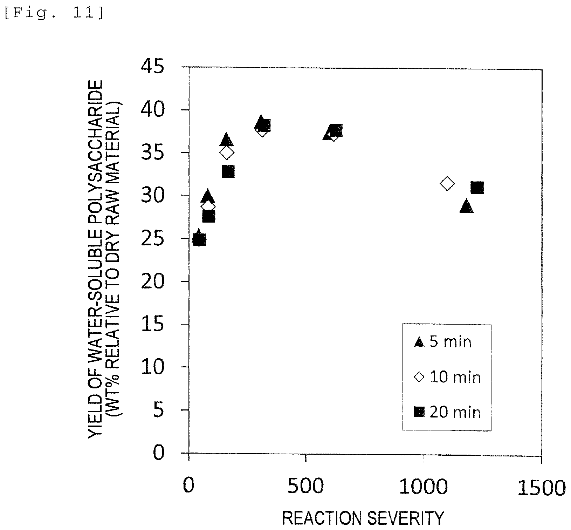

[Fig. 11] Fig. 11 is a graph showing the change in the yield of a water-soluble polysaccharide with respect to the reaction severity when extraction was performed for 5 minutes, 10 minutes, or 20 minutes within a temperature range above 100°C using superheated steam-dried pulp as a raw material. The water-soluble polysaccharide is the sum of constituent sugars excluding sucrose and free monosaccharides, linked acetic acid, linked methanol, and ferulic acid.

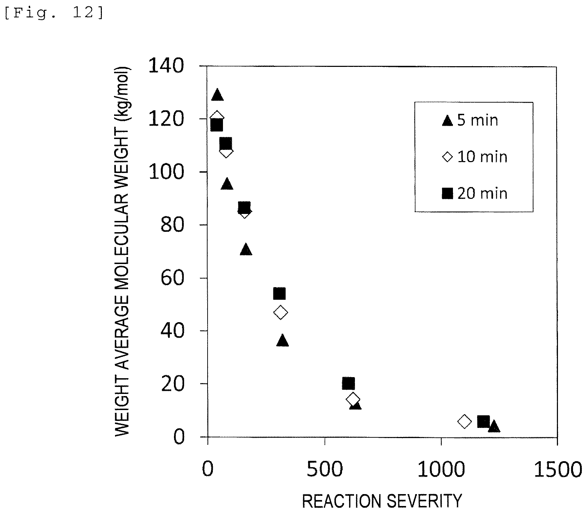

[Fig. 12] Fig. 12 is a graph showing the change in the weight average molecular weight of an extract with respect to the reaction severity when extraction was performed for 5 minutes, 10 minutes, or 20 minutes within a temperature range above 100°C using superheated steam-dried pulp as a raw material.

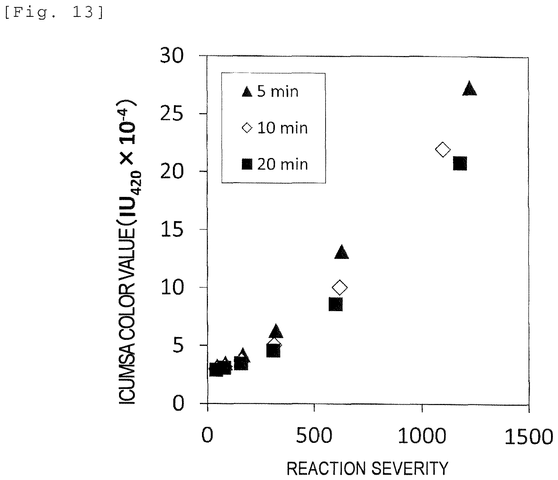

[Fig. 13] Fig. 13 is a graph showing the change in the color value of an extract with respect to the reaction severity when extraction was performed for 5 minutes, 10 minutes, or 20 minutes within a temperature range above 100°C using superheated steam-dried pulp as a raw material.

Description of Embodiments

Hereinafter, the present invention will be described in detail.

The present invention is characterized by specifying preferred conditions for extracting a water-soluble polysaccharide containing pectin as a main component at a liquid temperature of 140°C or lower using superheated steam-dried pulp as a raw material. The technical features are a) selection of a raw material and b) specification of preferred extraction conditions therefor, and reside in that, as a result of organically combining them, the extraction efficiency is unexpectedly good in spite of a milder pH (3.0 to 5.0) as compared with a conventionally adopted acid extraction method, and the excessive degradation of a neutral sugar side chain of pectin to be extracted, and the demethyl esterification and deacetylation are suppressed.

As a result, an extract in which the purity of a water-soluble polysaccharide per solid content is high is obtained without particularly performing purification, and both a high yield and a high purity are achieved. In addition, it is possible to obtain a water-soluble polysaccharide, which contains pectin as a main component, and has a high degree of methyl esterification and a high degree of acetylation, and is rich in neutral sugars mainly containing arabinose as a constituent sugar. Further, the obtained water-soluble polysaccharide is characterized by being rich in molecules with a relative molecular weight of 10,000 to 100,000. That is, it is characterized by having both technical effects of improving the extraction efficiency of pectin and obtaining a water-soluble polysaccharide having a unique composition.

The present invention a) has a great significance in focusing on superheated steam-dried pulp which is a special raw material among those described above, and b) has a remarkable effect such that it is not necessary to add an acid, and the yield of a water-soluble polysaccharide mainly containing pectin increases in spite of mild extraction conditions, and the excessive degradation of a neutral sugar side chain of pectin, and the demethyl esterification and deacetylation are suppressed as compared with a case where general beet pulp (drum-dried pulp) or undried pressed pulp is used as a raw material.

In the step of producing sugar from sugar beet, the root of the sugar beet brought to the factory is washed, cut into stick-shaped pieces called cossettes, and then mixed with hot water at 60 to 70°C to extract the sugar content. Beet pulp (water content: 90 to 91 wt%), which is a residue after sugar content extraction, is pressed and dehydrated (In the present application, this is referred to as "pressed pulp". The water content is usually 72 wt% or less), and is subjected to a drying step to form dried beet pulp, which is mainly used for feed application. Drying of beet pulp is essential for preventing rot and stabilizing quality.

Conventionally, a drum drying method of drying with hot air at about 650 to 1,000°C has been used for drying beet pulp. On the other hand, in recent years, a superheated steam drying method of drying with superheated steam at about 110 to 200°C has been put into practical use for the purpose of energy saving and reduction of carbon dioxide emissions. However, in Europe and North America where sugar beet is widely cultivated and many sugar production factories that use sugar beet as the raw material are located, there are still only about 20 sugar production factories in which a superheated steam dryer was introduced, the percentage of which is less than 10% of the total number of sugar production factories, and the mainstream is still a drum dryer.

The inventors of the present application conducted intensive studies for the purpose of obtaining a water-soluble polysaccharide containing pectin in a high yield by a simple method without particularly adding a mineral acid, which will be a burden on cost and environment, and also developing a technique that enables acquisition of a water-soluble polysaccharide, which mainly contains pectin, and has a high degree of methyl esterification and a high degree of acetylation, and is rich in neutral sugars mainly containing arabinose as a constituent sugar, which was not achieved in a conventional acid heating extraction method and as a result, they focused on the method of drying beet pulp and found the particle size of the raw material and the temperature extraction condition that achieve a remarkable effect when a water-soluble polysaccharide containing pectin is extracted using superheated steam-dried pulp as the raw material, and thus achieved the purpose.

In the superheated steam drying method, the pressed pulp is dried with superheated steam at a steam pressure of 0.12 to 0.4 MPa, preferably 0.25 to 0.27 MPa and at a steam temperature of 110 to 200°C, preferably 130 to 185°C, more preferably 150 to 180°C (in the present application, the dried beet pulp obtained by this method is referred to as "superheated steam-dried pulp"), and the drying may be performed so that the water content of the pulp at the outlet of the superheated steam dryer is 17% or less, preferably 15% or less, and more preferably 12% or less. Although completely dried superheated steam-dried pulp can also be used in the present invention, the superheated steam-dried pulp discharged from the outlet of the dryer naturally releases moisture in the atmosphere even if some moisture remains, and equilibrates at approximately around 5% water content. Therefore, it is generally not desirable in terms of energy cost to almost completely dry the pulp to 5%, however, in the present invention, superheated steam-dried pulp in which the water content of the pulp at the outlet of the superheated steam dryer is 0 to 17%, preferably 5 to 15%, and more preferably 8 to 12% can be used. The effect of the present application is obtained only when using the dried beet pulp obtained by the superheated steam drying method. The extraction of pectin cannot be efficiently achieved under the intended mild pH (pH 3.0 to 5.0) and temperature condition (100°C or lower) when using undried pressed pulp or pulp produced by another drying method such as drum-dried pulp.

Here, the system of a dryer for a beet pulp used in a sugar production factory using sugar beet as the raw material will be described.

A drum dryer (drum drier) has a system of drying with a high-temperature combustion gas and is composed of a combustion furnace and a cylindrical drying drum. The fuel burns together with primary air in the combustion furnace, and the generated combustion gas at 650 to 1,000°C is sent into the drying drum. The pressed pulp is fed into the slowly rotating drying drum and dried with the high-temperature combustion gas while being sent toward the outlet by a special mechanism. The dried pulp is separated from the exhaust gas by a cyclone at the outlet.

The basic concept of a superheated steam dryer (drier using superheated steam) is such that pressed pulp is dried with superheated steam in a pressure-sealed vessel. A belt drying (Belt driers) type, a Svensk Energyteknik type, and a fluidized bed drying type have been developed and put into practical use. The belt dryer has a system in which pressed pulp on a belt in a pressure vessel is dried with superheated steam while being conveyed. The Svensk Energyteknik type is configured such that pressed pulp is fed into a tube in which superheated steam circulates and dried while moving in the tube (reference: Sugar technology: Beet and cane sugar manufacture, edited by Verlag Dr. Albert Bartens KG, Bartens, 1998, Berlin.). The fluidized bed drying type is the most widespread dryer. It has a structure in which a fluidized bed divided into cells is arranged in a pressure vessel of the dryer, and superheated steam circulating upward by an impeller comes into contact with pulp in the fluidized bed and dries the pulp. The moist pressed pulp containing water is supplied to a screw conveyor by a rotary valve and carried to the first cell in the pressure vessel, and moves in each cell and is dried while flowing by the flow of the superheated steam. When it reaches the last cell, it is discharged as dried pulp having a water content of about 10% through the screw conveyor and the rotary valve. The excess steam generated from water contained in the beet pulp is taken out from the pressure vessel and used as a heat source for concentrating the sugar liquid (effect evaporator) in the sugar production step, which contributes to energy saving in the sugar production factory (as an example of the pressure of steam in the dryer to be taken out, 3.7 bar = 0.37 MPa, the steam pressure in the dryer is controlled by the effect evaporator condenser for concentrating the sugar liquid). A part of the steam in the dryer is reheated through a heat exchanger and circulates in the dryer as superheated steam at a predetermined temperature, so that the drying of the beet pulp proceeds. In the fluidized bed dryer, since the pulp during drying is constantly stirred in the fluidized bed, it is characterized in that drying proceeds uniformly even if the particle size of the pulp varies. (Reference: Sugar industry 142, 693-698 (2017)).

The present invention enables the extraction of a water-soluble polysaccharide in a high yield in spite of mild pH and temperature conditions by newly finding a principle that the extraction of a water-soluble polysaccharide mainly containing pectin is facilitated by drying beet pulp with superheated steam, and newly using superheated steam-dried pulp as the raw material based on the new principle. In addition, the water-soluble polysaccharide obtained in this manner is characterized by being rich in molecules with a relative molecular weight of 10,000 to 100,000. It provides an extraction technique with low cost and low environmental load without needing to particularly add a mineral acid or heat to a high temperature during extraction. Further, it is characterized in that since it is not necessary to add an acid during extraction, the hydrolysis of a methyl ester group, an acetyl group, or a neutral sugar side chain in a pectin molecule is suppressed, and thus a water-soluble polysaccharide having a high degree of methyl esterification and a high degree of acetylation and rich in neutral sugars mainly containing arabinose as a constituent sugar is obtained. Since the excessive degradation of pectin during extraction is suppressed, an extract in which the purity of the water-soluble polysaccharide per solid content is high is obtained without particularly performing purification, and both a high yield and a high purity are achieved.

In other words, the present invention is characterized in that by newly using superheated steam-dried pulp as the raw material, pectin can be extracted and obtained in a high yield in spite of mild conditions, and also with a high purity by suppressing the hydrolysis of a methyl ester group, an acetyl group, or a neutral sugar side chain in a pectin molecule, and such technical features have not been known so far, and the present invention is the first invention.

As described above, the superheated steam drying method and the drum drying method differ greatly in the drying temperature condition and principle. A method for extracting a water-soluble polysaccharide from beet pulp is widely known as shown in the following literature, but in the literature techniques, a drying system for dried beet pulp used for extraction is not indicated. The comparison with the prior art will be described below.

In PTL 1 (Japanese Patent No. 2542462), not superheated steam-dried pulp, but pressed pulp is used as the raw material and is subjected to an extraction treatment under mild conditions. In this case, for example, in the extraction treatment at 90°C for 1 hour, the yield of a solid content is approximately around 15%, and since most of this is sucrose remaining in the pulp, it is presumed that the obtained yield of a water-soluble polysaccharide is only about several %. On the other hand, according to the invention of the present application, superheated steam-dried pulp is used as the raw material, and therefore, the yield of a water-soluble polysaccharide at room temperature exceeds 20% (Table 3, etc.), and an extremely remarkable effect is exhibited as will be described later.

In PTL 2 (JP-B-63-9521), an extraction treatment is performed at 80°C using a dried material of beet pulp. Here, in order to improve the extraction ratio by swelling the plant tissue to promote the elution of pectin into the extract liquid, it is essential to add a specific cationic surfactant, and the extraction method is different from that of the present invention. Further, in terms of yield, when the yield of an acidic sugar (a component constituting the main chain of pectin) is compared, it is 9.0 to 15.0 wt% (Table 5, etc.) in the invention of the present application, whereas in the literature technique, it is only about half of that. Therefore, although the object of the invention of improving the yield is the same, they are completely different in terms of extraction method and effect.

PTL 3 (Japanese Patent No. 5900792) describes a technique for producing a ferulic acid-linked carbohydrate constituting pectin using beet fibers, which are a pulverized material of dried beet pulp, as the raw material. This technique is a technique in which pectin is degraded by a catalytic reaction of water in a liquid state by heating a beet fiber suspension in a liquid-tight state in an airtight vessel to 160°C or higher to reach a pressure equal to or higher than the saturated steam pressure (called hydrothermal reaction), thereby obtaining an oligosaccharide which is a releasable ferulic acid-linked carbohydrate, and the target product is different. It can be said that the object and technical significance of the invention are completely different from those of the present invention that enables acquisition of a water-soluble polysaccharide containing pectin as a main component under mild extraction conditions.

On the other hand, PTL 4 (Japanese Patent No. 5805390) describes a technique for excessively degrading beet fibers, which are a pulverized product of dried beet pulp, to arabinose by a heating treatment with superheated steam at about 180°C for 1 hour. Under such severe conditions, pectin is excessively degraded, and therefore, pectin cannot be obtained in the first place. In the invention of the present application, beet pulp in a wet state is dried by a superheated steam treatment, and pectin is solubilized while suppressing excessive degradation in the drying process, and it is clear that both are completely different in object and technical significance of the invention in the first place. That is, in the literature technique, the finding that the extraction of a water-soluble polysaccharide containing pectin is facilitated by drying beet pulp with superheated steam is not mentioned.

In the present invention, superheated steam-dried pulp is used as the raw material. The superheated steam-dried pulp is obtained by drying pressed pulp with superheated steam at a temperature of 110 to 200°C, preferably 130 to 185°C, more preferably 150 to 180°C, and at a pressure of 0.12 to 0.4 MPa, preferably 0.25 to 0.27 MPa by a superheated steam dryer according to the above-mentioned drying system. With respect to the water content of the superheated steam-dried pulp, drying may be performed so that the water content of the pulp at the outlet of the superheated steam dryer is 17% or less, preferably 15% or less, and more preferably 12% or less. Accordingly, rot of beet pulp is prevented, and the quality is stabilized. The superheated steam-dried pulp discharged from the outlet of the dryer naturally releases moisture in the atmosphere even if some moisture remains, and equilibrates at approximately around 5% water content. Therefore, the water content of the pulp at the outlet of the superheated steam dryer in the present invention is 0 to 17%, preferably 5 to 15%, and more preferably 8 to 12%. The drying capacity (water evaporation amount per time) of the superheated steam dryer is also affected by the type of dryer, but is determined by the steam pressure supplied to the dryer from the factory boiler and the pressure inside the dryer vessel (the pressure is controlled and determined by the condenser of the effect evaporator for concentration used for sugar production), and the size of the dryer. Further, the drying treatment time cannot be set unconditionally because the supply amount of the pressed pulp with respect to the drying capacity and the factors of the state of the pressed pulp (particle size, water content, etc.) are interrelated, but it is usually 45 minutes or less, and is preferably in a range expected to be 1 to 15 minutes. Note that the effect of the present invention is not affected by the superheated steam drying time of beet pulp, but the drying time is in a range of 30 seconds to 45 minutes, preferably 45 seconds to 30 minutes, and more preferably 1 to 15 minutes.

When the extraction treatment of a water-soluble polysaccharide containing pectin as a main component is performed using superheated steam-dried pulp, this pulp has extremely high water absorbability, and if the fluidity becomes poor, the extraction treatment operation becomes difficult, and therefore, it is necessary to increase the amount of water added. As a result, the extract liquid becomes thin, which is disadvantageous in the subsequent concentration step. The larger the particle size of this pulp is, the easier it is to absorb water and swell, and the lower the fluidity is. Even if sufficient fluidity is given, if the particle size is large, extraction takes time and efficiency is poor. Therefore, it is preferred to adjust the particle size of the pulp to be used for extraction. For example, it is preferred to adjust the particle size so as to pass through a sieve with a mesh size of 2.0 mm (preferably 0.84 mm), in other words, to have a particle size of 9 mesh pass (preferably 20 mesh pass).

The dried pulp whose particle size is adjusted in this manner is subjected to an extraction treatment, and the amount of water added at this time may be determined by aiming at the minimum amount capable of obtaining the fluidity of the pulp suspension, and the solid content concentration becomes about 3 to 15 wt%.

The extraction temperature is 60 to 140°C, preferably 70 to 100°C, and more preferably 80 to 90°C. When beet pulp dried with superheated steam is used, a pectin extract liquid in a high yield is obtained in a relatively short time (for example, 6 hours or less) even under mild conditions of 100°C or lower without particularly adding an acid. As a result, demethyl esterification or deacetylation, or the excessive degradation of a neutral sugar side chain (arabinose is a main component) of pectin can be suppressed. By performing extraction in a temperature range above 100°C using a pressurized vessel, a high yield is obtained in a shorter time while suppressing the change in the quality of pectin in the same manner as described above. However, in order to prevent the progress of excessive degradation and decoloration of a water-soluble polysaccharide, it is necessary to eliminate the uneven extraction temperature and control the extraction temperature and time more precisely. Further, when extraction is performed at a high temperature of 150°C or higher for 10 minutes or more, the effect of improving the yield of pectin and the like by superheated steam drying of the raw material beet pulp is not exhibited.

An index obtained by converting the history of heat received by the beet pulp suspension (slurry) and time into an energy value (referred to as reaction severity in the present application) can be used for precise control required for the extraction condition of 100°C or higher. By strictly controlling the reaction severity, it is possible to suppress the excessive degradation and coloration of a water-soluble polysaccharide. In the present invention, the reaction severity represented by the following Formula 1 is set to preferably 300 or less, more preferably 150 or less. If particularly desired, the extraction can also be performed in an extremely short time of less than 20 minutes even under a severe temperature condition above 140°C within a range where the reaction severity does not exceed 300. The reaction severity for each temperature and each reaction time is as shown in Table 1.

```
(Formula 1)

Reaction severity = reaction time [min] × exp{(reaction

temperature [°C] - 100) / 14.75}
```

[Table 1]

| Temperature (°C) | Reaction time (min) | | | | |
|---|---|---|---|---|---|
| | 5 | 10 | 20 | 60 | 120 |
| 170 | 575 | 1,151 | 2,302 | 6,906 | 13,811 |
| 160 | 292 | 584 | 1,169 | 3,506 | 7,011 |
| 150 | 148 | 297 | 593 | 1,780 | 3,559 |
| 140 | 75 | 151 | 301 | 903 | 1,807 |
| 130 | 38 | 76 | 153 | 459 | 917 |
| 120 | 19 | 39 | 78 | 233 | 466 |
| 110 | 10 | 20 | 39 | 118 | 236 |
| 100 | 5 | 10 | 20 | 60 | 120 |

The extraction (reaction) pH is preferably 2.0 or higher, and in order to suppress demethyl esterification and deacetylation and to suppress the excessive degradation of a neutral sugar side chain mainly composed of arabinose, it is preferred to perform the extraction at pH 3.0 or higher. Further, since pectin generally becomes unstable when the pH exceeds 5.0, it is more preferred to perform the extraction at pH 3.0 to 5.0. When beet pulp is suspended in water and the extraction operation is performed, whether the beet pulp is pressed pulp, drum-dried pulp, or the superheated steam-dried pulp of the invention of the present application, the pH of the suspension usually falls within a range of 3.0 to 5.0, and therefore, pH adjustment is not particularly needed. The reason why the beet pulp suspension shows weak acidity (pH 3.0 to 5.0) is that galacturonic acid itself in the main chain of pectin shows acidity, and also some of the acetyl groups that modify galacturonic acid are de-esterified and acetic acid is released, and moreover, it is due to an organic acid contained in the raw material pressed pulp itself.

There is no particular limitation on the extraction (reaction) time, and the reaction may be continued until pectin is obtained in a high yield. The reaction time varies depending on the reaction temperature, pH condition, etc., but is usually 5 minutes to 24 hours, and preferably 1 to 6 hours. When an extraction temperature of 100°C or higher is selected aiming at short-time extraction, it is necessary to perform precise control so that the reaction severity is 300 or less, preferably 150 or less.

As for the pressure during extraction, it is not necessary to particularly perform pressurization, and the extraction can be performed at normal pressure, and it is one of the important features of the present invention that the extraction can be performed under such conditions. However, as already described, when the temperature exceeds 100°C, the pressure is set to atmospheric pressure or higher.

By performing the extraction treatment (or reaction) in this manner, a water-soluble polysaccharide containing pectin as a main component can be obtained in the following yield.

(1) The yield of a solid content per dry raw material is 30 to 60 wt%, and the yield of a water-soluble polysaccharide is 20 to 45 wt%.
(2) The yield of an acidic sugar per dry raw material is 9.0 to 15.0 wt%.
(3) The yield of neutral sugars excluding free monosaccharides and sucrose per dry raw material is 10 to 25.0 wt%.
(4) The yield of linked acetic acid per dry raw material: 1.0 to 5.0 wt%
(5) The yield of linked methanol per dry raw material: 1.0 to 3.0 wt%
(6) The yield of ferulic acid per dry raw material: 0.2 to 1.0 wt%

The water-soluble polysaccharide obtained by this method depends on the extraction conditions, but is as follows.

(1) The solid content with a relative molecular weight, measured by gel filtration HPLC using pullulan as a standard substance, of 2,000 or more with respect to the total solid content is 65% or more.
(2) The ratio of the solid content with a relative molecular weight, measured by gel filtration HPLC using pullulan as a standard substance, of 10,000 to 100,000 to the solid content with a relative molecular weight of 2,000 or more is 40% or more.
(3) The constituent sugars (excluding free monosaccharides and sucrose) include 40 to 50% of an acidic sugar, 35 to 50% of arabinose, 5 to 15% of galactose, and 1 to 5% of rhamnose.

11

(4) The neutral sugar/acidic sugar ratio (w/w) of the constituent sugars in a water-soluble polysaccharide fraction obtained by removing small-sized molecules by a dialysis treatment with a molecular weight cut-off of 10,000 to 20,000 is 0.6 to 1.5.

(5) The degree of acetylation is 50% or more and the degree of methyl esterification is 60% or more.

(6) The ferulic acid content per water-soluble polysaccharide is 0.5 to 1.5 wt%.

Hereinafter, Examples of the present invention will be described, but the present invention is not limited only to these Examples, and various modifications thereof are possible within the technical idea of the present invention.

Example 1

The effect of the difference in the method of drying the raw material on the extraction of a water-soluble polysaccharide when the pH was not adjusted (pH 4 to 5) was examined.

(Experiment 1: Comparison of Water Content by Each Drying Method)

Beet pulp (water content: 90 to 91 wt%), which is a residue after sugar content extraction in the step of producing sugar from sugar beet, was pressed (dehydrated), whereby pressed pulp was obtained. The pressed pulp was dried by a batch shelf dryer (normal pressure, 105°C, hot air circulation type), a continuous drum dryer (700 to 800°C), and a continuous fluidized bed superheated steam dryer (150 to 170°C, internal pressure: 0.25 MPa). The drying residence time of the pressed pulp in each dryer was adjusted so that the water content of the discharged dried pulp was about 5 to 10%. After each dried pulp was crushed with a mill, the pulp was adjusted to 60 mesh pass (a material passing through a mesh size of 0.25 mm). The water content of each dried pulp is as shown in Table 2.

[Table 2]

| Drying method | Water content (%) |
| --- | --- |
| Without drying | About 70 |
| Shelf drying | 5.1 |
| Drum drying | 9.2 |
| Superheated steam drying | 10.2 |

(Experiment 2: Comparison of Yield of Solid Content by Molecular Weight When Using Each Dried Pulp as Extraction Raw Material)

Desalted water was added to each dried pulp (final solid content concentration: 6%), and shaking extraction was performed at room temperature (20 to 25°C) or 90°C for 6 hours. In addition, desalted water was added to each dried pulp (final solid content concentration: 12%), and heating was performed for about 10 minutes in a screw cap stainless steel tube (35 mL volume) into which a K thermocouple connected to a data logger was inserted until the reaction severity reached 150, 300, or 600 on an oil bath at 140, 150, or 160°C, respectively, and immediately thereafter, water cooling was performed. The pH was not particularly adjusted in the extraction in any case, and the pH of each suspension before extraction was 4.0 to 5.0.

Each of the resultants was filtered through diatomaceous earth and the entire amount of the supernatant was recovered. The solid content amount in the recovered filtrate, the molecular weight distribution of the solid content, and the ICUMSA color value were measured by the following methods.

- Solid content amount: measured with a refractometric Brix meter.

- Molecular weight distribution of solid content: measured with gel filtration HPLC under the following conditions.

- ICUMSA color value: In a 0.1 M sodium phosphate buffer solution (pH 7.0), the absorbance at 420 nm was measured with an ultraviolet-visible spectrophotometer and converted into an ICUMSA color value.

[Gel Filtration HPLC]

- Guard column: TSKgel guard columun PWXL $\phi$ 6.0 mm $\times$ 4 cm, Tosoh
- Column: TSKgel GMPWXL $\phi$ 7.8 mm $\times$ 30 cm, Tosoh
- Eluent: a 0.1 M sodium nitrate aqueous solution
- Flow rate: 0.4 mL/min
- Temperature: 40°C
- Analysis time: 60 min
- Injection amount: 20 $\mu$L
- Detection: RI
- Standard substance: Pullulan Shodex standard P-82, glucose (calibration curve: linear approximation)
- Pretreatment: After lyophilization, the resultant is dissolved in an eluent and filtered through a 0.45 $\mu$M cellulose acetate membrane.

The results are shown in Figs. 1 and 2. As described later, the solid content with a molecular weight of 2,000 or more shown in a stacked bar graph in Fig. 1 is mainly composed of a water-soluble polysaccharide. Under the three conditions: room temperature and 6 hours; 90°C and 6 hours; and 140°C and 10 minutes (reaction severity: 150), the yield of the solid content with a molecular weight of 2,000 or more was high when using the superheated steam-dried pulp obtained under any conditions, and in particular, under the extraction conditions of room temperature and 6 hours, the difference due to the method of drying the raw material was remarkable. From this result, it was inferred that in the superheated steam-dried pulp, a polysaccharide containing pectin has already changed to a state where it is easily solubilized. Further, when using the superheated steam-dried pulp, the yield of the solid content with a molecular weight of 2,000 or more was high, and the occurrence of a solid with a molecular weight less than 2,000 due to excessive degradation was small, and therefore, the ratio of the solid content with a molecular weight of 2,000 or more to the total solid content shown in the stacked bar graph in Fig. 1 exceeded 70% in all the cases of the above-mentioned three extraction conditions, and it was found that an extract in which the purity of the water-soluble polysaccharide is high is obtained without particularly performing purification.

On the other hand, under severe extraction conditions of 150°C and 10 minutes (reaction severity: 300) or severer, there was no significant difference in yield or molecular weight distribution due to the difference in the method of drying the raw material pulp, and due to excessive degradation, the ratio of the solid content with a molecular weight of 2,000 or more to the solid content was less than 70%. Coloration also greatly progressed under the extraction conditions of 150°C and 10 minutes or severer, and was particularly remarkable under the conditions of 160°C and 10 minutes (reaction severity: 600) (Figs. 1 and 2). From this, under the conditions severer than 150°C and 10 minutes (reaction severity: 300), superheated steam drying of the raw material was not particularly needed for obtaining pectin in a high yield, and since excessive degradation and coloration progressed, they did not satisfy the requirements of the present invention.

When the shelf-dried pulp was used as the raw material, under the extraction conditions of 140°C and 10 minutes (reaction severity: 150) or severer, and when the superheated steam-dried pulp was used as the raw material, under all the extraction conditions, the ratio of a category with a medium molecular weight (10,000 to 100,000) to the solid content with a molecular weight of 2,000 or more shown in the line graph in Fig. 1 exceeded 40% and was high, and a characteristic water-soluble polysaccharide rich in polysaccharides with a medium molecular weight was obtained. It was found that when the superheated steam-dried pulp was used as the raw material, a water-soluble polysaccharide having such a characteristic molecular weight distribution is obtained in a high yield under mild temperature conditions.

When summarizing the above, it was found that by using the superheated steam-dried pulp as the extraction raw material, a water-soluble polysaccharide with a molecular weight of 2,000 or more is obtained in a high yield without excessive degradation under conditions milder than the conditions of 140°C and 10 minutes (reaction severity: 150) as compared with the other dried pulp, and also the coloration of the extract is suppressed. In addition, the obtained water-soluble polysaccharide with a molecular weight of 2,000 or more was characterized by being rich in medium-sized molecules having a molecular weight of 10,000 to 100,000.

(Experiment 3: Comparison of Yield by Component When Using Each Dried Pulp as Extraction Raw Material)

With respect to the extract liquids obtained in Experiment 2, the yield of constituent sugars of a water-soluble polysaccharide, the yield of free monosaccharides, the yields of linked or free acetic acid and methanol, the yield of ferulic acid, and the yield of sucrose were measured by the following methods.

- Yield of acidic sugar: measured by the 3,5-dimethylphenol method using galacturonic acid as a standard substance
- Yield of constituent sugars other than acidic sugar and yield of free monosaccharides: The yield of sugars released after hydrolysis at 100°C for 4 hours under the condition of 2 N sulfuric acid (the yield of constituent sugars other than the acidic sugar) and the yield of free monosaccharides before hydrolysis (respective neutral monosaccharides, galacturonic acid, and glucuronic acid) were measured under the following HPAEC-PAD analysis conditions. The names describing sugars are abbreviated as follows: Ara (arabinose), Gal (galactose), Rhm (rhamnose), Man (mannose), Xyl (xylose), and Fuc (fucose).

- Yield of sucrose: measured under the following HPLC analysis condition 1
- Yields of acetic acid and methanol: After (or before) hydrolysis for 2 hours at room temperature in a 50 vol% isopropanol aqueous solution containing 0.4 N sodium hydroxide, the measurement was performed under the following HPLC analysis condition 2, and linked type and previously released type were distinguished and quantitatively determined as follows, respectively.

```
Linked type = after hydrolysis - before hydrolysis,

Free type = before hydrolysis
```

Note that methanol is denoted as MeOH in the table.

- Yield of felulic acid: measured with a spectrophotometer assuming that the molar extinction coefficient at a wavelength of 375 nm in a 0.1 M glycine-sodium hydroxide buffer solution (pH 10) was 31,430 L/mol·cm

[HPAEC-PAD Analysis Conditions]

- Guard column: CarboPac PA1 Guard $\phi$ 4.0 mm $\times$ 5 cm Dionex
- Column: CarboPac PA1 $\phi$ 4.0 mm $\times$ 25 cm Dionex
- Eluent: Sodium hydroxide 20 mM constant
  Sodium acetate 0 mM (0-12 min), 0 $\rightarrow$ 20 mM (12-25 min), 200 mM (25-28 min), 200 $\rightarrow$ 500 mM (28-28.5 min), 500 mM (28.5-33.5 min), 500 $\rightarrow$ 0 mM (33.5-34 min), 0 mM (34-43 min)
- Flow rate: 1.0 mL/min
- Post-column injection: a 0.3 M sodium hydroxide aqueous solution (0.5 mL/min)
- Injection amount: 5 $\mu$L
- Detection: Int PAD (AgCl electrode)
- Internal standard substance: D-ribose
- Pretreatment: After neutralization with a saturated aqueous barium hydroxide solution, the resultant is centrifuged at 1900 x g for 6 minutes, and the supernatant is filtered through a 0.45 $\mu$M cellulose acetate membrane

[HPLC Measurement Condition 1]

- Column: CK02A $\phi$ 20 mm $\times$ 25 cm, Mitsubishi Chemical
- Guard column: CK02AG $\phi$ 8.0 mm $\times$ 1 cm, Mitsubishi Chemical
- Mobile phase: Ultrapure water
- Flow rate: 1.0 mL/min
- Temperature: 80°C
- Injection amount: 20 $\mu$L
- Analysis time: 80 minutes
- Detection: RI
- Quantitative determination method: Quantitative determination is performed based on the area% of each peak with respect to the total area
- Pretreatment: 0.45 $\mu$M cellulose acetate membrane filtration

[HPLC Analysis Condition 2]

- Guard column: SUGAR SH-G $\phi$ 6.0 mm $\times$ 5 cm Shodex
- Column: SUGAR SH1011 $\phi$ 8.0 mm $\times$ 30 cm Shodex
- Mobile phase: 5 mM sulfuric acid aqueous solution

- Flow rate: 0.6 mL/min
- Temperature: 60°C
- Injection amount: 20 μL
- Detection: Differential refractometer (RI)
- External standard calibration curve method
- Pretreatment: Centrifugation is performed at 12000 × g for 10 minutes, and the supernatant is filtered through a 0.45 μM cellulose acetate membrane.

The results are shown in Table 3. The yield of the water-soluble polysaccharide shown in this table was calculated from the sum of the constituent sugars, linked acetic acid, linked methanol, and ferulic acid. This value was roughly in agreement with the value of the yield of the solid content with a molecular weight of 2,000 or more, and it was confirmed that the water-soluble polysaccharide is obtained in a high yield in the case of the superheated steam-dried pulp.

[Table 3]

| Extraction conditions | | Without pH adjustment, room temperature, 6 hr | | | Without pH adjustment, 90°C, 6 hr | | |
|---|---|---|---|---|---|---|---|
| Raw material drying method | | Shelf drying | Drum drying | Superheated steam drying | Shelf drying | Drum drying | Superheated steam drying |
| Total solid content | | 12.1 | 13.2 | 36.1 | 28.0 | 23.1 | 47.6 |
| Relative molecular weight of 2,000 or more | | 2.8 | 5.1 | 26.4 | 18.4 | 15.3 | 36.2 |
| Water-soluble polysaccharide | | 2.6 | 5.3 | 24.8 | 17.7 | 13.9 | 34.1 |
| Constituent sugars | Acidic sugar | 0.9 | 1.8 | 10.1 | 7.4 | 6.7 | 13.2 |
| | Ara | 0.7 | 1.2 | 8.3 | 5.7 | 3.3 | 12.0 |
| | Gal | 0.4 | 0.6 | 1.9 | 1.2 | 1.1 | 3.0 |
| | Rhm | 0.0 | 0.1 | 0.6 | 0.3 | 0.3 | 0.9 |
| | Man | 0.0 | 0.0 | 0.1 | 0.1 | 0.1 | 0.1 |
| | Xyl | 0.0 | 0.0 | 0.1 | 0.0 | 0.0 | 0.1 |
| | Fuc | 0.0 | 0.0 | 0.0 | 0.0 | 0.0 | 0.1 |
| Acetic acid (linked) | | 0.4 | 1.4 | 2.0 | 1.7 | 1.5 | 2.6 |
| Methanol (linked) | | 0.2 | 0.2 | 1.5 | 1.1 | 0.8 | 1.8 |
| Ferulic acid | | 0.00 | 0.05 | 0.24 | 0.13 | 0.13 | 0.36 |
| Free monosaccharides or sucrose | | 6.6 | 5.9 | 5.8 | 6.6 | 5.6 | 6.3 |
| Free acetic acid | | 0.1 | 0.1 | 0.1 | 0.2 | 0.2 | 0.2 |
| Free methanol | | 0.0 | 0.0 | 0.0 | 0.0 | 0.0 | 0.0 |
| Others | | 2.8 | 1.8 | 5.4 | 3.5 | 3.3 | 6.9 |
| Unit: wt% relative to dry raw material<br>Water-soluble polysaccharide: Sum of constituent sugars, acetic acid (linked), methanol (linked), and ferulic acid | | | | | | | |

Example 2

When the pH during extraction was changed, the effect of the difference in the method of drying the raw material on the extraction of a water-soluble polysaccharide was examined.

(Experiment 1: Comparison of Yield of Solid Content, Weight Average Molecular Weight, and Color Value of Extracts When Changing pH During Extraction Using Each Dried Pulp as Raw Material)

Desalted water and 10% sulfuric acid were added to each dried pulp in Experiment 1 in Example 1 to adjust the pH to each value (final solid content concentration: 6%), and shaking extraction was performed at 90°C for 2 hours or 6 hours. Each of the resultants was filtered through diatomaceous earth and the entire amount of the supernatant was recovered. The solid content amount, the molecular weight distribution of the solid content, and the ICUMSA color value in the recovered filtrate were measured in the same manner as in Experiment 2 in Example 1. However, the solid content derived from the added sulfuric acid was subtracted for correction, and the peak derived from sulfuric acid was also removed from the molecular weight distribution.

The results are shown in Figs. 3 and 4. In the case of the pulp prepared by a drying method other than superheated steam drying, the lower the pH during extraction was, the greater the increase in the yield of the solid content with a molecular weight of 2,000 or more was, but in the case of the superheated steam-dried pulp, a high yield of the solid content was obtained in any pH range, and it was found that a water-soluble polysaccharide is easily extracted even without adding sulfuric acid. On the other hand, also when any of the dry raw materials was used, the lower the pH was, the more excessive degradation occurred simultaneously with the extraction, and the ratio of the solid content with a molecular weight of 2,000 or more to the total solid content extracted became smaller, which was remarkable particularly at pH 2 or lower.

When focusing on the yield for each molecular weight category, in the case where the pulp prepared by a drying method other than superheated steam drying was used as the raw material, in the extract obtained under an acidic condition by adding sulfuric acid, the ratio of the molecular weight of 100,000 or more was large, and the ratio of the medium molecular weight category (10,000 to 100,000) to the solid content with a molecular weight of 2,000 or more was less than 40%. On the other hand, in the extract from the superheated steam-dried pulp (without pH adjustment or pH 3), the ratio of the molecular weight category (10,000 to 100,000) to the solid content with a molecular weight of 2,000 or more exceeds 40% and was high, and the extract was rich in medium-sized molecules. From Fig. 4, the molecular weight distribution of the extract obtained by extraction from the shelf-dried pulp under an acidic condition of pH 1.5 had a distribution peak at a molecular weight of 100,000 or more, which was close to that of commercially available beet pectin (manufactured by CPKelco, brand: BETA BI-J). These were greatly different from the molecular weight distribution of the water-soluble polysaccharide extracted from the superheated steam-dried pulp without pH adjustment (pH 4 to 5).

(Experiment 2: Comparison of Yields by Constituent Sugars When Performing Dialysis Treatment of Acid Extract Prepared from Each Dry Raw Material and Recovering Polysaccharide Components)

The extract liquid in Experiment 1 in Example 2 was enclosed in a regenerated cellulose dialysis membrane (molecular weight cut off of 14,000), and a dialysis treatment was performed for several days while regularly exchanging the external solution for desalted water. The entire amount of the internal solution after dialysis was recovered and lyophilized, and the constituent sugar content was measured in the same manner as in Experiment 3 in Example 1.

The results are shown in Fig. 5. From all the extracts for which the raw material and the extraction conditions were different, other components, many of which are low molecular weight components were removed by the dialysis. With respect to the constituent sugars of the polysaccharide components, the yield of each of the acidic sugar, galactose, and other neutral sugars did not change before and after the dialysis. The lower the pH during extraction was, the more decreased arabinose being a constituent sugar after the dialysis, and therefore, it was found that excessive degradation occurred during extraction. It was particularly remarkable at pH 2 or lower, and the neutral sugar/acidic sugar ratio was less than 0.6 and greatly decreased. Even when the shelf-dried pulp was used as the raw material, a polysaccharide having a large neutral sugar/acidic sugar ratio was extracted under the extraction condition of pH 3 to 5, but the yield was low, and only when the superheated steam-dried pulp was used as the raw material, a polysaccharide having a large neutral sugar/acidic sugar ratio was obtained in a high yield. In other words, it was found that by using the superheated steam-dried pulp as the extraction raw material and performing extraction at pH 3 to 5, a water-soluble polysaccharide is obtained in a high yield without excessively degrading a polysaccharide mainly composed of arabinose, and as a result, a water-soluble polysaccharide having a large neutral sugar/acidic sugar ratio is obtained. It is also characterized in that since excessive degradation does not occur, there are few small-sized molecules in the extract, and the proportion (purity) of the water-soluble polysaccharide is high.

(Experiment 3: Comparison of Degree of Methyl Esterification and Degree of Acetylation When Performing Dialysis Treatment of Acid Extract Prepared from Each Dry Raw Material and Recovering Polysaccharide Components)

Subsequently, with respect to the polysaccharide components recovered by dialysis in Experiment 2 in Example 2, the acidic sugar content and the acetic acid and methanol contents were measured in the same manner as in Experiment 3 in Example 1, and the molar ratio of acetic acid to the acidic sugar (the degree of acetylation) and the molar ratio of methanol to the acidic sugar (the degree of methyl esterification) were calculated.

The results are shown in Fig. 6. When any dried pulp was used as the raw material, the lower the pH during extraction was, the more decreased the degree of acetylation and the degree of methyl esterification. Even when the shelf-dried pulp was used as the raw material, a polysaccharide having a high degree of acetylation and a high degree of methyl esterification was extracted by extraction at pH 3 to 5, but the yield was low, and only when the superheated steam-dried pulp was used as the raw material, a polysaccharide having a high degree of acetylation and a high degree of methyl esterification was obtained in a high yield. In other words, it was found that by using superheated steam-dried pulp as the extraction raw material and performing the extraction at pH 3 to 5, a water-soluble polysaccharide is obtained in a high yield in a state where the degree of acetylation and the degree of methyl esterification are high.

When summarizing the above Examples 1 and 2, in the case where a water-soluble polysaccharide mainly containing pectin was extracted from beet pulp, by using superheated steam-dried pulp as the extraction raw material, a condition of pH 3 to 5 in which the extraction efficiency was poor in the past could be adopted, and the degradation of a polysaccharide composed of neutral sugars, particularly arabinose or the degradation of modifying groups (an acetyl group and a methyl ester group) of the acidic sugar was suppressed, and as a result, a water-soluble polysaccharide rich in neutral sugars mainly containing arabinose as a constituent sugar, and having a high degree of methyl esterification and a high degree of acetylation was obtained in a high yield. Further, a characteristic water-soluble polysaccharide rich in medium-sized molecules having a relative molecular weight of 10,000 to 100,000 could be obtained. In addition, by suppressing the excessive degradation of a water-soluble polysaccharide during extraction, particularly the excessive degradation of a polysaccharide composed of arabinose, a water-soluble polysaccharide having a high purity per solid content was obtained without particularly performing purification, and both a high yield and a high purity could be achieved.

Example 3

The effect of the particle size of the raw material when using superheated steam-dried pulp as the raw material on the extraction step was examined.

(Experiment 1: Relationship Between Particle Size and Water Absorbability of Superheated Steam-Dried Pulp)

Pulverized superheated steam-dried pulp was sieved, and 10 g of the sieved pulp as a dried material was weighed in a graduated cylinder with an inner diameter of 4 cm and a volume of 250 mL, and desalted water was added thereto, and the volume of the pulp swollen in water after being left to stand overnight (settling volume in water) was measured.

The results are shown in Fig. 7. The larger the particle size of the dried pulp was, the more water it absorbed and expanded. When the water absorbability is high, it is necessary to increase the amount of water added to give fluidity, which is disadvantageous to the subsequent concentration step, but it was confirmed that the swelling property is suppressed by adjusting the particle size to 20 mesh pass (mesh size: 0.84 mm), more preferably 30 mesh pass (mesh size: 0.50 mm).

(Experiment 2: Relationship Between Particle Size of Superheated Steam-Dried Pulp and Yield of Solid Content)

An excess amount of desalted water was added to pulverized and sieved superheated steam-dried pulp (final solid content concentration: 3 wt%), followed by shaking extraction at 90°C, and the solid content amount of the supernatant was measured with a refractometric Brix meter.

The results are shown in Fig. 8. It was confirmed that as compared with unpulverized pulp, the solid content can be extracted more efficiently (in a higher yield in a shorter time) by adjusting the particle size to 9 mesh pass (mesh size: 2.0 mm), more preferably 20 mesh pass (mesh size: 0.84 mm) by the pulverization treatment.

Example 4

The extraction conditions (temperature and time) when using superheated steam-dried pulp as the raw material were examined.

(Experiment 1: Yield of Solid Content by Molecular Weight, Weight Average Molecular Weight, and ICUMSA Color Value When Using Superheated Steam-Dried Pulp as Raw Material)

A material obtained by adding desalted water to pulverized superheated steam-dried pulp (100 mesh pass:

mesh size: 0.15 mm) (final solid content concentration: 12%), followed by shaking extraction at 90°C or lower, or a material obtained by heating for about 10 minutes at 140, 150, or 160°C in a screw cap stainless steel tube into which a K thermocouple was inserted in the same manner as in Experiment 2 in Example 1 was filtered through diatomaceous earth, and the entire amount of the supernatant was recovered.

The yield of a solid content by molecular weight, weight average molecular weight, and ICUMSA color value at various extraction temperatures and extraction times were measured by the methods in Experiment 2 in Example 1.

The results are shown in Table 4. It was confirmed that under severe conditions of 150°C and 10 minutes or severer (reaction severity of 300 or more), excessive degradation progresses to reduce the molecular weight, and the ratio of the solid content with a molecular weight of 2,000 or more to the total solid content falls below 70%, and coloration is intensified.

[Table 4]

| Extraction conditions | | Yield by relative molecular weight (wt% relative to dry raw material) | | | | | | 10,000 to 100,000 /2,000 or more (%) | 2,000 or more /total solid content (%) | Weight average molecular weight (kg/mol) | ICUMSA color value ($IU_{420} \times 10^{-3}$) |
|---|---|---|---|---|---|---|---|---|---|---|---|
| Temperature | Time (hr) | Total solid content | 2,000 or more | Less than 2,000 | Categories of 2,000 or more | | | | | | |
| | | | | | 2,000 to 10,000 | 10,000 to 100,000 | 100,000 or more | | | | |
| Room temperature | 24 | 37 | 27 | 10 | 4 | 12 | 11 | 45 | 72 | 121 | 32 |
| 70°C | 3 | 37 | 27 | 9 | 4 | 12 | 11 | 45 | 74 | 127 | 29 |
| | 6 | 40 | 30 | 10 | 4 | 13 | 12 | 45 | 75 | 127 | 30 |
| | 12 | 41 | 31 | 10 | 5 | 14 | 12 | 46 | 75 | 120 | 30 |
| | 24 | 44 | 33 | 11 | 6 | 16 | 12 | 48 | 75 | 109 | 28 |
| 80°C | 3 | 40 | 30 | 10 | 5 | 14 | 12 | 46 | 76 | 125 | 28 |
| | 6 | 42 | 33 | 10 | 5 | 15 | 12 | 47 | 77 | 118 | 26 |
| | 12 | 46 | 35 | 11 | 6 | 17 | 12 | 49 | 76 | 103 | 30 |
| | 24 | 51 | 38 | 12 | 8 | 19 | 11 | 51 | 75 | 83 | 29 |
| 90°C | 3 | 43 | 33 | 11 | 5 | 16 | 12 | 48 | 76 | 110 | 29 |
| | 6 | 48 | 36 | 11 | 6 | 16 | 14 | 45 | 76 | 94 | 28 |
| | 12 | 52 | 38 | 13 | 9 | 20 | 10 | 52 | 74 | 71 | 33 |
| | 24 | 56 | 42 | 14 | 11 | 22 | 9 | 53 | 74 | 58 | 38 |
| 140°C | 10 min | 53 | 41 | 13 | 10 | 19 | 12 | 48 | 76 | 98 | 36 |
| 150°C | 10 min | 59 | 40 | 19 | 15 | 19 | 7 | 46 | 68 | 42 | 51 |
| 160°C | 10 min | 61 | 34 | 28 | 17 | 15 | 2 | 44 | 55 | 11 | 102 |

(Experiment 2: Yield by Component, Constituent Sugar Composition of Water-Soluble Polysaccharide, Degree of Acetylation, Degree of Methyl Esterification, and Ferulic Acid Content When Using Superheated Steam-Dried Pulp as Raw Material)

With respect to the filtrates recovered in Experiment 1 in Example 4, the yield of constituent sugars of a water-soluble polysaccharide, the yield of free monosaccharides, the yields of linked or free acetic acid and methanol, the yield of ferulic acid, and the yield of sucrose at each of various extraction temperatures and extraction times were measured by the methods in Experiment 3 in Example 1.

The results are shown in Table 5. Further, the yield of a water-soluble polysaccharide excerpted from Table 5 is shown in Fig. 9. In order to extract the water-soluble polysaccharide more efficiently in a shorter time, 70°C or higher, more preferably 80°C or higher, further more preferably 90°C or higher was needed. Under severe conditions of 150°C and 10 minutes or severer (reaction severity of 300 or more), the acidic sugar was excessively degraded, and also the yield of the water-soluble polysaccharide apparently became large beyond the yield of the solid content with a molecular weight of 2,000 or more. As shown in Table 4, under severe conditions of 150°C and 10 minutes or severer (reaction severity of 300 or more), the yield of the solid content with a molecular weight less than 2,000 increased, and it is inferred that the polysaccharide reduces its molecular weight and is converted to an oligosaccharide, and the constituent sugars derived from the oligosaccharide are considered to be analytically contained in the water-soluble polysaccharide.

[Table 5]

| Extraction conditions | | Total solid content | Relative molecular weight of 2,000 or more | Water-soluble polysaccharide | Constituent sugars | | | | | | | | Acetic acid (linked) | MeOH (linked) | Ferulic acid | Free monosaccharides or sucrose | Free acetic acid | Free MeOH | Others |
|---|---|---|---|---|---|---|---|---|---|---|---|---|---|---|---|---|---|---|---|
| Temperature | Time (hr) | | | | Acidic sugar | Neutral sugars | Ara | Gal | Rhm | Man | Xyl | Fuc | | | | | | | |
| Room temperature | 24 | 36.6 | 26.5 | 23.9 | 9.5 | 11.1 | 8.4 | 2.0 | 0.6 | 0.1 | 0.0 | 0.0 | 1.9 | 1.2 | 0.25 | 4.6 | 0.07 | 0.03 | 8.0 |
| 70°C | 3 | 36.7 | 27.2 | 24.8 | 9.9 | 11.5 | 8.6 | 2.1 | 0.6 | 0.1 | 0.0 | 0.0 | 1.9 | 1.3 | 0.26 | 4.4 | 0.08 | 0.03 | 7.4 |
| | 6 | 39.6 | 29.6 | 26.6 | 10.3 | 12.4 | 9.3 | 2.3 | 0.7 | 0.1 | 0.0 | 0.1 | 2.2 | 1.3 | 0.29 | 4.5 | 0.10 | 0.03 | 8.3 |
| | 12 | 41.0 | 30.8 | 27.8 | 10.9 | 13.3 | 10.0 | 2.4 | 0.7 | 0.1 | 0.0 | 0.0 | 2.0 | 1.3 | 0.29 | 3.7 | 0.14 | 0.05 | 9.3 |
| | 24 | 44.0 | 33.0 | 30.7 | 11.8 | 14.7 | 11.0 | 2.7 | 0.8 | 0.1 | 0.0 | 0.1 | 2.3 | 1.6 | 0.33 | 3.7 | 0.20 | 0.01 | 9.4 |
| 80°C | 3 | 40.2 | 30.4 | 27.7 | 10.9 | 13.2 | 9.9 | 2.4 | 0.8 | 0.1 | 0.0 | 0.0 | 2.1 | 1.3 | 0.30 | 3.6 | 0.10 | 0.05 | 8.7 |
| | 6 | 42.3 | 32.5 | 30.5 | 12.1 | 14.2 | 10.6 | 2.6 | 0.8 | 0.1 | 0.0 | 0.1 | 2.5 | 1.5 | 0.32 | 3.7 | 0.13 | 0.01 | 8.0 |
| | 12 | 46.4 | 35.1 | 33.0 | 12.9 | 15.8 | 11.8 | 2.9 | 0.9 | 0.1 | 0.1 | 0.1 | 2.4 | 1.5 | 0.36 | 3.8 | 0.19 | 0.02 | 9.5 |
| | 24 | 50.6 | 38.2 | 36.3 | 13.5 | 18.1 | 13.4 | 3.4 | 1.1 | 0.1 | 0.1 | 0.1 | 2.7 | 1.6 | 0.42 | 5.7 | 0.32 | 0.02 | 8.3 |
| 90°C | 3 | 43.3 | 32.7 | 30.4 | 11.8 | 14.7 | 11.0 | 2.7 | 0.9 | 0.1 | 0.0 | 0.1 | 2.2 | 1.4 | 0.33 | 4.6 | 0.12 | 0.02 | 8.1 |
| | 6 | 47.6 | 36.3 | 34.0 | 12.8 | 16.6 | 12.3 | 3.1 | 1.0 | 0.1 | 0.0 | 0.1 | 2.6 | 1.6 | 0.38 | 5.2 | 0.20 | 0.02 | 8.1 |
| | 12 | 51.6 | 38.2 | 36.8 | 13.7 | 18.5 | 13.6 | 3.5 | 1.2 | 0.1 | 0.1 | 0.1 | 2.6 | 1.6 | 0.42 | 5.9 | 0.32 | 0.02 | 8.6 |
| | 24 | 55.8 | 41.6 | 39.8 | 14.8 | 20.3 | 14.8 | 4.0 | 1.4 | 0.1 | 0.1 | 0.1 | 2.6 | 1.6 | 0.46 | 6.6 | 0.54 | 0.03 | 8.8 |
| 140°C | 10 min | 53.5 | 40.6 | 39.4 | 14.9 | 19.7 | 14.6 | 3.7 | 1.3 | 0.1 | 0.0 | 0.1 | 2.8 | 1.6 | 0.49 | 5.9 | 0.19 | 0.02 | 8.0 |
| 150°C | | 58.7 | 40.1 | 42.1 | 14.7 | 22.3 | 16.1 | 4.5 | 1.5 | 0.1 | 0.0 | 0.1 | 2.8 | 1.7 | 0.59 | 7.1 | 0.32 | 0.09 | 9.1 |
| 160°C | | 61.5 | 33.8 | 40.1 | 12.6 | 22.6 | 16.0 | 4.7 | 1.6 | 0.1 | 0.1 | 0.1 | 2.7 | 1.4 | 0.68 | 8.1 | 0.68 | 0.30 | 12.3 |
| Unit: wt% relative to dry raw material | | | | | | | | | | | | | | | | | | | |

The results of calculating the constituent sugar composition (wt%) and the neutral sugar/acidic sugar ratio of the water-soluble polysaccharide based on each yield in Table 5 are shown in Table 6. Under severe conditions of 150°C and 10 minutes or severer (reaction severity of 300 or more), the neutral sugar/acidic sugar ratio apparently became large, but this is considered to be because the acidic sugar is excessively degraded under the conditions of 150°C and 10 minutes or severer conditions, and oligosaccharides other than the water-soluble polysaccharide are also contained in the constituent sugars, not due to the result of recovering only the polysaccharide components by dialysis and measuring them. When performing comparison with commercially available beet pectin (manufactured by CPKelco, brand: BETA BI-J), the composition of the water-soluble polysaccharide mainly containing pectin obtained by the present invention has a very high arabinose content as a constituent sugar and also a high neutral sugar/acidic sugar ratio, and is extremely unique.

[Table 6]

| Extraction conditions | | Constituent sugar composition (%) | | | | | | Neutral sugar /Acidic sugar |
|---|---|---|---|---|---|---|---|---|
| Temperature | Time (hr) | Acidic sugar | Neutral sugars | | | | | |
| | | | Sum | Ara | Gal | Rhm | Others | |
| Room temperature | 24 | 46.3 | 53.7 | 40.5 | 9.6 | 3.0 | 0.6 | 1.2 |
| 70°C | 3 | 46.2 | 53.8 | 40.3 | 9.6 | 3.0 | 0.9 | 1.2 |
| | 6 | 45.4 | 54.6 | 41.0 | 9.9 | 3.0 | 0.6 | 1.2 |
| | 12 | 45.1 | 54.9 | 41.1 | 10.0 | 3.1 | 0.7 | 1.2 |
| | 24 | 44.4 | 55.6 | 41.6 | 10.2 | 3.1 | 0.6 | 1.3 |
| 80°C | 3 | 45.1 | 54.9 | 40.9 | 9.8 | 3.4 | 0.8 | 1.2 |
| | 6 | 46.0 | 54.0 | 40.2 | 9.9 | 3.2 | 0.7 | 1.2 |
| | 12 | 45.0 | 55.0 | 41.0 | 10.2 | 3.1 | 0.7 | 1.2 |
| | 24 | 42.8 | 57.2 | 42.5 | 10.7 | 3.4 | 0.7 | 1.3 |
| 90°C | 3 | 44.5 | 55.5 | 41.5 | 10.1 | 3.3 | 0.6 | 1.2 |
| | 6 | 43.6 | 56.4 | 41.9 | 10.4 | 3.5 | 0.6 | 1.3 |
| | 12 | 42.5 | 57.5 | 42.2 | 10.8 | 3.6 | 0.9 | 1.4 |
| | 24 | 42.1 | 57.9 | 42.1 | 11.3 | 3.9 | 0.7 | 1.4 |
| 140°C | 10 min | 43.0 | 57.0 | 42.1 | 10.8 | 3.7 | 0.5 | 1.3 |
| 150°C | | 39.7 | 60.3 | 43.6 | 12.1 | 4.1 | 0.5 | 1.5 |
| 160°C | | 35.8 | 64.2 | 45.4 | 13.4 | 4.6 | 0.7 | 1.8 |
| Commercially available product | | 74.7 | 25.3 | 6.1 | 14.1 | 4.7 | 0.4 | 0.3 |

The results of calculating the molar ratio of linked acetic acid to the acidic sugar (the degree of acetylation), the molar ratio of linked methanol to the acidic sugar (the degree of methyl esterification), and the weight percent of ferulic acid per water-soluble polysaccharide based on each yield in Table 5 are shown in Table 7. When performing comparison with commercially available beet pectin (manufactured by CPKelco, brand: BETA BI-J), the degree of acetylation and the degree of methyl esterification of the water-soluble polysaccharide mainly containing pectin obtained by the present invention are high, which is unique.

[Table 7]

| Extraction conditions | | Degree of acetylation | Degree of methyl esterification | Ferulic acid/ water-soluble polysaccharide |
|---|---|---|---|---|
| Temperature | Time (hr) | mol% relative to acidic sugar | | wt% |
| Room temperature | 24 | 65 | 73 | 1.0 |

(continued)

| Extraction conditions | | Degree of acetylation | Degree of methyl esterification | Ferulic acid/ water-soluble polysaccharide |
|---|---|---|---|---|
| Temperature | Time (hr) | mol% relative to acidic sugar | | wt% |
| 70°C | 3 | 63 | 78 | 1.0 |
| | 6 | 70 | 79 | 1.1 |
| | 12 | 59 | 72 | 1.1 |
| | 24 | 62 | 83 | 1.1 |
| 80°C | 3 | 61 | 71 | 1.1 |
| | 6 | 66 | 73 | 1.0 |
| | 12 | 59 | 70 | 1.1 |
| | 24 | 64 | 72 | 1.2 |
| 90°C | 3 | 61 | 71 | 1.1 |
| | 6 | 66 | 75 | 1.1 |
| | 12 | 61 | 71 | 1.1 |
| | 24 | 58 | 68 | 1.2 |
| 140°C | 10 min | 60 | 65 | 1.2 |
| 150°C | | 62 | 68 | 1.4 |
| 160°C | | 70 | 69 | 1.7 |
| Commercially available product | | 40 | 53 | 1.0 |

(Experiment 3: Confirmation of Linked State of Ferulic Acid of Water-Soluble Polysaccharide Extracted Using Superheated Steam-Dried Pulp as Raw Material)

With respect to the filtrates recovered in Experiment 2 in Example 4, the molecular weight distribution was measured under the gel filtration HPLC conditions (detector: RI and UV 325 nm) described in Experiment 2 in Example 1.
The results are shown in Fig. 10. The molecular weight distribution of a ferulic acid-linked sugar measured at UV 325 nm which is near the maximum absorption wavelength of ferulic acid and the molecular weight distribution of the solid content measured with an RI detector were roughly in agreement with each other within a range where the relative molecular weight exceeds 2,000 when extraction was performed at 90°C for 6 hours, and ferulic acid was confirmed to be present mainly in a state of being linked to the water-soluble polysaccharide. It was considered that most of the ferulic acid was linked to an oligosaccharide or a polysaccharide even in the case of 160°C and 10 minutes, but the molecular weight was greatly reduced as compared with the case of 90°C and 6 hours.

(Experiment 4: Relationship Between Reaction Severity, and Yield of Water-Soluble Polysaccharide, Weight Average Molecular Weight, and ICUMSA Color Value When Performing Extraction at 100°C or Higher Using Superheated Steam-Dried Pulp as Raw Material)

Extraction was performed at a predetermined reaction severity by changing the reaction temperature within a temperature range above 100°C for a fixed reaction time of about 5 minutes, 10 minutes, or 20 minutes as shown in Table 1. Then, the yield of the water-soluble polysaccharide, the weight average molecular weight, and the ICUMSA color value were measured by the methods in Experiment 2 and Experiment 3 in Example 1.
The results are shown in Figs. 11, 12, and 13. It was confirmed that the yield of the water-soluble polysaccharide, the weight average molecular weight, and the color value generally follow the reaction severity regardless of the difference in reaction time, and it was indicated that by using the reaction severity as the index and strictly controlling the reaction, the excessive degradation and coloration of the water-soluble polysaccharide can be suppressed.
When summarizing the above, according to the present invention, a water-soluble polysaccharide (mainly pectin) can be obtained in a high yield in a relatively short time by a simple method (without needing any special agent or device) with milder extraction conditions (temperature and pH) as compared with a conventional method such as an acid treatment, a hydrothermal treatment, or a high-temperature and high-pressure treatment. Further, the water-soluble polysaccharide obtained by the present invention is characterized in that since the excessive degradation of a neutral sugar side chain mainly composed of arabinose contained as a constituent sugar thereof is suppressed and also demethyl esterification and deacetylation are suppressed, the degree of methyl esterification and the degree of acetylation are high and a neutral sugar mainly composed of arabinose as a constituent sugar is abundantly contained. Further, its relative molecular weight is also characteristic, and a water-soluble polysaccharide rich in medium-sized molecules with a relative molecular weight of 10,000 to 100,000 is obtained. In addition, a water-soluble polysaccharide with a high purity per solid content is obtained without particularly performing purification, and both a high yield and a high purity can be achieved.

The present invention can be summarized as follows.

An object of the present invention is to obtain a water-soluble polysaccharide mainly containing pectin in a high yield in a state of being rich in neutral sugars mainly containing arabinose as a constituent sugar thereof, and also having a high degree of methyl esterification and a high degree of acetylation under mild extraction conditions (temperature and pH conditions) and also without using any special agent or device when performing extraction of the water-soluble polysaccharide (mainly pectin) from beet pulp.

Then, a production method for extracting a desired water-soluble polysaccharide containing pectin in a high yield in a relatively short time under the above-mentioned mild extraction conditions by using superheated steam-dried pulp as the raw material of the beet pulp generated as a by-product in the step of producing sugar from sugar beet is provided.

In addition, an object thereof is to suppress degradation (reduction in molecular weight or deesterification) of a polysaccharide and coloration of an extract liquid as well as to obtain a water-soluble polysaccharide (mainly pectin) in a high yield under mild extraction conditions (temperature and pH) and also without using any special agent or device.

Then, by using superheated steam-dried pulp after adjusting the particle size as the raw material of the beet pulp generated as a by-product in the step of producing sugar from sugar beet, a water-soluble polysaccharide (mainly pectin) can be obtained in a high yield in a short time under mild extraction conditions, and also the reduction in the molecular weight of the water-soluble polysaccharide and the suppression of coloration of the extract liquid can be achieved.

## Claims

1. A method for producing a water-soluble polysaccharide, **characterized by** performing extraction at 60 to 140°C using dried beet pulp obtained by superheated steam drying as a raw material.

2. The method for producing a water-soluble polysaccharide according to claim 1, **characterized in that** when the beet pulp as recited in claim 1 used as the raw material is adjusted to a particle size passing through a sieve with a mesh size of 2.0 mm and suspended in water at 20°C for 24 hours, the water-soluble polysaccharide is extracted in an amount of 10 wt% or more per dry raw material.

3. The method for producing a water-soluble polysaccharide according to any one of claims 1 to 2, **characterized in that** beet pulp with a particle size passing through a sieve with a mesh size of 2.0 mm is used as the raw material.

4. The method for producing a water-soluble polysaccharide according to any one of claims 1 to 2, **characterized in that** beet pulp with a particle size passing through a sieve with a mesh size of 0.84 mm is used as the raw material.

5. The method for producing a water-soluble polysaccharide according to any one of claims 1 to 4, **characterized in that** the superheated steam drying is performed under the conditions of 0.12 to 0.40 MPa and 110°C to 200°C.

6. The method for producing a water-soluble polysaccharide according to any one of claims 1 to 5, **characterized in that** the superheated steam drying is performed for a treatment time of 45 minutes or less.

7. The method for producing a water-soluble polysaccharide according to any one of claims 1 to 6, **characterized in that** the extraction condition is pH 3.0 to 5.0.

8. The method for producing a water-soluble polysaccharide according to any one of claims 1 to 7, **characterized in that** the extraction condition is 70 to 100°C.

9. The method for producing a water-soluble polysaccharide according to any one of claims 7 to 8, **characterized in**

**that** in the composition of an extract containing the water-soluble polysaccharide to be obtained, a solid content with a relative molecular weight, measured by gel filtration HPLC using pullulan as a standard substance, of 2,000 or more with respect to the total solid content is 65% or more.

10. The method for producing a water-soluble polysaccharide according to any one of claims 7 to 8, **characterized in that** in the water-soluble polysaccharide to be obtained, the ratio of a solid content with a relative molecular weight, measured by gel filtration HPLC using pullulan as a standard substance, of 10,000 to 100,000 to a solid content with a relative molecular weight of 2,000 or more is 40% or more.

11. The method for producing a water-soluble polysaccharide according to any one of claims 7 to 8, wherein the water-soluble polysaccharide to be obtained has a degree of methyl esterification of 60% or more and a degree of acetylation of 50% or more.

12. The method for producing a water-soluble polysaccharide according to any one of claims 7 to 8, wherein in a material obtained by subjecting the water-soluble polysaccharide to be obtained to a dialysis treatment with a molecular weight cut-off of 10,000 to 20,000 to remove small-sized molecules, the neutral sugar/acidic sugar ratio (w/w) of the constituent sugars is 0.6 to 1.5.

13. A method for producing a water-soluble polysaccharide, **characterized by** performing pulverization to a particle size passing through a sieve with a mesh size of 0.84 to 2.0 mm using beet pulp dried with superheated steam at 110 to 200°C and 0.12 to 0.40 MPa as a raw material, and performing extraction under the conditions of 60 to 140°C and pH 3.0 to 5.0.

14. A method for producing a water-soluble polysaccharide, **characterized by** performing pulverization to a particle size passing through a sieve with a mesh size of 0.84 to 2.0 mm using beet pulp obtained by drying with superheated steam at 110 to 200°C and 0.12 to 0.40 MPa using a superheated steam dryer as a raw material, and performing extraction under the conditions of 60 to 140°C and pH 3.0 to 5.0.

15. A method for producing a water-soluble polysaccharide, **characterized by** comprising the following Step A to Step C:

Step A: a step of drying beet pulp with superheated steam at 110 to 200°C and 0.12 to 0.40 MPa;
Step B: a step of pulverizing the beet pulp obtained in Step A to a particle size passing through a sieve with a mesh size of 0.84 to 2.0 mm; and
Step C: a step of performing extraction from the beet pulp obtained in Step B under the conditions of 60 to 140°C and pH 3.0 to 5.0.

16. A method for producing a water-soluble polysaccharide while suppressing the excessive degradation and coloration of the water-soluble polysaccharide by controlling a reaction using a reaction severity represented by the following Formula (1) as an index, **characterized by** performing extraction with hot water over 100°C using dried beet pulp obtained by superheated steam drying as a raw material:

$$\text{Reaction severity} = \text{reaction time [min]} \times \exp\{(\text{reaction temperature [°C]} - 100) / 14.75\} \quad \text{Formula (1)}.$$

17. The method according to claim 16, **characterized by** performing the extraction with hot water at 140°C or lower using dried beet pulp obtained by superheated steam drying as a raw material, wherein the extraction is performed within a range where the reaction severity does not exceed 150.

18. A beet-derived water-soluble polysaccharide, **characterized in that** a solid content with a relative molecular weight, measured by gel filtration HPLC using pullulan as a standard substance, of 2,000 or more with respect to the total solid content is 65% or more, and at least one of the following requirements (a) to (c) is satisfied:

(a) the ratio of a solid content with a relative molecular weight, measured by gel filtration HPLC using pullulan as a standard substance, of 10,000 to 100,000 to a solid content with a relative molecular weight of 2,000 or more is 40% or more;
(b) the degree of methyl esterification is 60% or more and the degree of acetylation is 50% or more; and

(c) in a material obtained by performing a dialysis treatment with a molecular weight cut-off of 10,000 to 20,000 to remove small-sized molecules, the neutral sugar/acidic sugar ratio (w/w) of the constituent sugars is 0.6 to 1.5.

19. A beet-derived water-soluble polysaccharide, **characterized in that** a solid content with a relative molecular weight, measured by gel filtration HPLC using pullulan as a standard substance, of 2,000 or more with respect to the total solid content is 65% or more, and the following requirements (a) to (c) are satisfied:

(a) the ratio of a solid content with a relative molecular weight, measured by gel filtration HPLC using pullulan as a standard substance, of 10,000 to 100,000 to a solid content with a relative molecular weight of 2,000 or more is 40% or more;
(b) the degree of methyl esterification is 60% or more and the degree of acetylation is 50% or more; and
(c) in a material obtained by performing a dialysis treatment with a molecular weight cut-off of 10,000 to 20,000 to remove small-sized molecules, the neutral sugar/acidic sugar ratio (w/w) of the constituent sugars is 0.6 to 1.5.

[Fig. 1]

[Fig. 2]

[Fig. 3]

[Fig. 4]

A : SHELF DRYING, pH 1.5, 90°C, 2 hr
B : SUPERHEATED STEAM DRYING, WITHOUT pH ADJUSTMENT, 90°C, 6 hr
C : COMMERCIALLY AVAILABLE PRODUCT (BEET-DERIVED PECTIN)

[Fig. 5]

90°C, 6 hr

SHELF DRYING    SUPERHEATED STEAM DRYING

OTHERS

OTHER NEUTRAL SUGARS

Gal

Ara

ACIDIC SUGAR

NEUTRAL SUGAR / ACIDIC SUGAR

*CONSTITUENT SUGARS EXCLUDING SUCROSE AND FREE MONOSACCHARIDES

[Fig. 6]

[Fig. 7]

[Fig. 8]

[Fig. 9]

[Fig. 10]

RELATIVE MOLECULAR WEIGHT

[Fig. 11]

[Fig. 12]

[Fig. 13]

## INTERNATIONAL SEARCH REPORT

International application No.

PCT/JP2020/041429

A. CLASSIFICATION OF SUBJECT MATTER
A23L5/00(2016.01)i; A23L29/231(2016.01)i; C08B 37/06(2006.01)i
FI: C08B37/06; A23L29/231; A23L5/00 N
According to International Patent Classification (IPC) or to both national classification and IPC

B. FIELDS SEARCHED

Minimum documentation searched (classification system followed by classification symbols)
A23L5/00; A23L29/231; C08B37/06

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| Y | CHEN, Hai-ming et al., "Properties and extraction of pectin-enriched materials from sugar beet pulp by ultrasonic-assisted treatment combined with subcritical water.", Food Chemistry, 24 July 2014, vol. 168, no. 1, pp. 302–310, doi:10.1016/j.foodchern.2014.07.078, abstract, page 303, left column, line 19 from the bottom to page 303, right column, line 23, page 309, left column, lines 22–33 | 1–19 |
| Y | TANC, Z. et al., "Dehydration of sugar-beet pulp in superheated steam and hot air.", Transactions of the ASAE, 2000, vol. 43, no. 3, pp. 685–689, doi:10.13031/2013.2750, abstract, page 685, left column, line 17 to page 686, right column, line 5, page 688, left column, lines 8–34, page 688, left column, line 43 to page 689, left column, line 23 | 1–19 |
| Y | CN 103483465 A (SOUTH CHINA UNIVERSITY OF TECHNOLOCY) 01 January 2014 (2014-01-01) paragraphs [0001]–[0024] | 1–19 |

☒ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 December 2020 (18.12.2020) | 28 December 2020 (28.12.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2020/041429

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2011-225745 A (ASUKII KK) 10 November 2011 (2011-11-10) entire text, in particular, paragraphs [0001]-[0003], [0010], [0016], [0018], [0019], [0023], [0024] | 1, 5-12, 16-19 |
| Y | KARIMI, F., "Applications of superheated steam for the drying of food products.", International Agrophysics, 2010, vol. 24, no. 2, pp. 195-204, http://www.international-agrophysics.org/Applications-of-superheated-steam-for-the-drying-of-food-products,106372,0,2.html, page 196, left column, lines 1-21, page 199, left column, lines 7-26 | 1, 5-12, 16-19 |
| Y | JP 2005-241239 A (MORITA, Minoru) 08 September 2005 (2005-09-08) paragraphs [0006]-[0008] | 1, 5-12, 16-19 |
| Y | US 2014/0325869 A1 (ASJ-IPR. APS) 06 November 2014 (2014-11-06) paragraphs [0002], [0003], [0005], [0011], [0065]-[0072] | 1, 5-12, 16-19 |
| Y | HUANG, Xin et al., "Effect of particle size of sugar beet pulp on the extraction and property of pectin.", Journal of Food Engineering, 2018, vol. 218, pp. 44-49, doi:10.1016/j.jfoodeng.2017.09.001, page 44, left column, lines 2-9, page 45, left column, lines 8-30, page 48, right column, lines 16-30 | 1-19 |

Form PCT/ISA/210 (continuation of second sheet) (January 2015)

**INTERNATIONAL SEARCH REPORT**
Information on patent family members

| International application no. |
|---|
| PCT/JP2020/041429 |

| Patent Documents referred in the Report | Publication Date | Patent Family | Publication Date |
|---|---|---|---|
| CN 103483465 A | 01 Jan. 2014 | WO 2015/027645 A1 | |
| JP 2011-225745 A | 10 Nov. 2011 | (Family: none) | |
| JP 2005-241239 A | 08 Sep. 2005 | (Family: none) | |
| US 2014/0325869 A1 | 06 Nov. 2014 | EP 2801778 A1 | |

Form PCT/ISA/210 (patent family annex) (January 2015)

## REFERENCES CITED IN THE DESCRIPTION

**Patent documents cited in the description**

- JP 2542462 B
- JP 63009521 B
- JP 5900792 B
- JP 5805390 B

**Non-patent literature cited in the description**

- **L. SAULNIER ; J. F. THIBAULT.** *J. Sci. Food and Agric.,* 1999, vol. 79, 396-402
- **F. MICHEL et al.** Extraction and characterization of pectins from sugar BEET PULP. *J. Food Sci.,* 1985, vol. 50, 1499-1500
- **R. SUN et al.** Extraction and physico-chemical characterization of pectins from sugar BEET PULP. *Polymer journal,* 1998, vol. 30 (8), 971-977
- Sugar technology: Beet and cane sugar manufacture. Bartens, 1998
- *Sugar industry,* 2017, vol. 142, 693-698